(19) Europäisches Patentamt / European Patent Office / Office européen des brevets

(11) **EP 2 667 524 A2**

(12) **EUROPEAN PATENT APPLICATION**
published in accordance with Art. 153(4) EPC

(43) Date of publication:
**27.11.2013 Bulletin 2013/48**

(51) Int Cl.:
*H04B 7/14* (2006.01)    *H04J 11/00* (2006.01)

(21) Application number: **12736790.2**

(22) Date of filing: **19.01.2012**

(86) International application number:
**PCT/KR2012/000487**

(87) International publication number:
**WO 2012/099412 (26.07.2012 Gazette 2012/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2011  US 201161435340 P**

(71) Applicant: **LG Electronics Inc.**
**Yeongdeungpo-gu**
**Seoul 150-721 (KR)**

(72) Inventor: **SEO, Hanbyul**
**Anyang-si**
**Gyeonggi-do 431-080 (KR)**

(74) Representative: **Cabinet Plasseraud**
**52, rue de la Victoire**
**75440 Paris Cedex 09 (FR)**

(54) **METHOD AND APPARATUS FOR TRANSMITTING AN UPLINK SIGNAL BY A RELAY IN A WIRELESS COMMUNICATION SYSTEM**

(57) The present invention relates to a wireless communication system, and to a method and apparatus for transceiving an uplink signal by a relay in a wireless communication system. According to the present invention, a scheme, in which the relay may correctly determine a reference resource for channel state information (CSI) calculation, and thus may perform accurate CSI transmission, may be provided. In addition, according to the present invention, a scheme, in which the relay may correctly determine timing for transmitting a sounding reference signal (SRS) based on the instruction of a base station and may perform SRS transmission, may be provided.

FIG. 14

(a)    (b)

EP 2 667 524 A2

## Description

### Technical Field

The present invention relates to a wireless communication system, and more particularly, to a method and apparatus for transmitting an uplink signal at a relay in a wireless communication system.

### Background Art

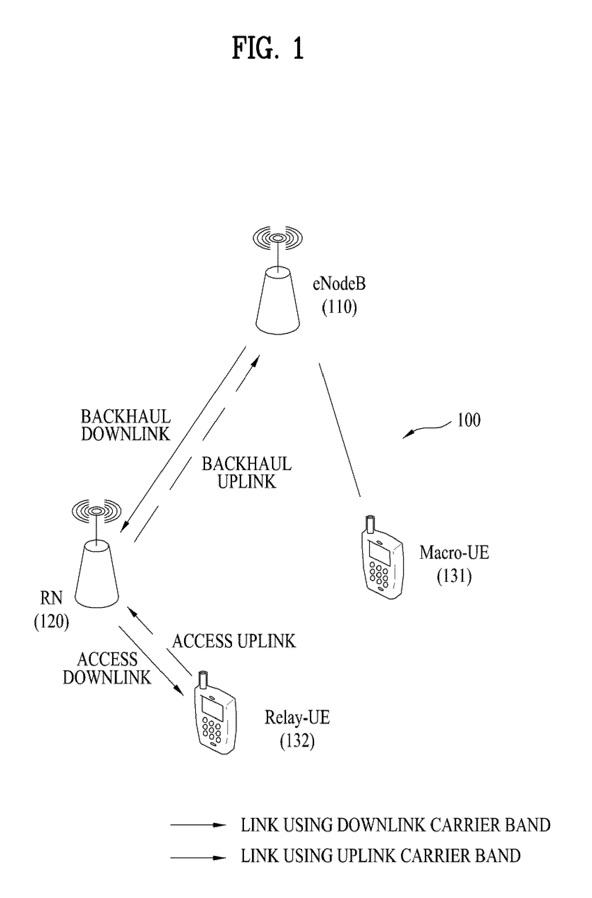

Fig. 1 illustrates a Relay Node (RN) 120 and User Equipments (UEs) 131 and 132 within the coverage area of an evolved Node B (eNB or eNode B) 110 in a wireless communication system 100. The RN 120 may forward data received from the eNB 110 to the UE 132 within the coverage area of the RN 120 and may forward data received from the UE 132 to the eNB 110. The RN 120 may extend a high-rate area, improve communication quality at a cell edge, and support a communication service inside a building or beyond the coverage area of the eNB 110. In Fig. 1, the UE 131 that receives a service directly from the eNB coexists with the UE 132 that receives a service from the eNB through the RN 120.

A radio link established between an eNB and an RN is called a backhaul link or a Un link. Specifically, a link from the eNB to the RN and a link from the RN to the eNB are called a backhaul downlink and a backhaul uplink, respectively. A radio link established between an RN and a UE is called an access link or a Uu link. Specifically, a link from the RN to the UE and a link from the UE to the RN are called an access downlink and an access uplink, respectively.

### Disclosure

### Technical Problem

Regarding the backhaul link (or Un link) between the eNB and the RN, the RN may report Channel State Information (CSI) about a backhaul downlink channel to the eNB. In addition, the RN may transmit a Sounding Reference Signal (SRS) to the eNB so that the eNB may calculate CSI about a backhaul uplink channel.

Resources used for a backhaul link and an access link may be divided into time units (e.g. subframes). In this case, if a CSI calculation scheme defined for a conventional operation between an eNB and a UE is still adopted, resources with which the  RN calculates CSI may not be configured as backhaul link resources. Accordingly, there is a need for defining a method for enabling an RN to reliably calculate CSI about a backhaul downlink. Likewise, if an SRS transmission scheme defined for a conventional operation between an eNB and a UE is applied to an RN operation, the RN may not transmit an SRS reliably.

Accordingly, an object of the present invention devised to solve the conventional problem is to provide a method for enabling an RN to calculate CSI and/or transmit an SRS reliably and efficiently.

It will be appreciated by persons skilled in the art that the objects that could be achieved with the present invention are not limited to what has been particularly described hereinabove and the above and other objects that the present invention could achieve will be more clearly understood from the following detailed description.

### Technical Solution

In an aspect of the present invention, a method for transmitting Channel State Information (CSI) at a relay in a wireless communication system includes determining a reference resource for CSI calculation, and calculating CSI in the reference resource and transmitting the calculated CSI in subframe n to a Base Station (BS). The reference resource is located in subframe n-k where k is a smallest value equal to or greater than 4, determined so that subframe n-k corresponds to a subframe configured for transmission from the BS to the relay.

In another aspect of the present invention, a relay for CSI in a wireless communication system includes a reception module for receiving a downlink signal from a BS, a transmission module for transmitting an uplink signal to the BS, and a processor for controlling the relay including the reception module and the transmission module. The processor is configured to determine a reference resource for CSI calculation, to calculate the CSI in the reference resource, and to transmit the calculated CSI in subframe n to the BS through the transmission module. The reference resource is located in subframe n-k where k is a smallest value equal to or greater than 4, determined so that subframe n-k corresponds to a subframe configured for transmission from the BS to the relay.

The followings may be applied commonly to the embodiments of the present invention.

Subframe n-k may be a subframe configured to carry a Physical Downlink Shared Channel (PDSCH) from the BS to the relay.

Subframe n-k may be configurable as a Multicast Broadcast Single Frequency Network (MBSFN) subframe by the RN.

The CSI may be transmitted periodically or aperiodically.

The wireless communication system may be a Time Division Duplexing (TDD) system or a Frequency Division Duplexing (FDD) system.

The CSI may include a Channel Quality Indicator (CQI) and the CQI may be calculated to be a value that makes a PDSCH receivable in the reference resource with an error probability not exceeding a predetermined error probability.

The relay may be a User Equipment (UE) that can communicate with the BS and another UE.

The subframe configured for transmission from the BS to the relay may be indicated by a higher layer.

In another aspect of the present invention, a method for transmitting a Sounding Reference Signal (SRS) at a relay in a wireless communication system includes receiving control information triggering SRS transmission in subframe n from a BS, determining subframe n+k for SRS transmitting, and transmitting an SRS in subframe n+k to the BS. k is a smallest value equal to or greater than 4, determined so that subframe n+k corresponds to a subframe configured for SRS transmission and a subframe configured for transmission from the relay to the BS.

In another aspect of the present invention, a relay for transmitting an SRS in a wireless communication system includes a reception module for receiving a downlink signal from a BS, a transmission module for transmitting an uplink signal to the BS, and a processor for controlling the relay including the reception module and the transmission module. The processor is configured to receive control information triggering SRS transmission in subframe n from the BS through the reception module, to determine subframe n+k for SRS transmission, and to transmit an SRS in subframe n+k to the BS through the transmission module. k is a smallest value equal to or greater than 4, determined so that subframe n+k corresponds to a subframe configured for SRS transmission and a subframe configured for transmission from the relay to the BS.

The followings may be applied commonly to the embodiments of the present invention.

The SRS may be transmitted aperiodically.

The wireless communication system may be a TDD system or an FDD system.

The relay may be a UE that can communicate with the BS and another UE.

The subframe configured for transmission from the relay to the BS may be indicated by a higher layer or the subframe configured for transmission from the relay to the BS may be determined implicitly from a subframe configured for transmission from the BS to the relay indicated by the higher layer.

The above general description and following detailed description of the present invention are exemplary to give an additional description of the invention as claimed in the claims.

## Advantageous Effects

According to the present invention, a method for enabling an RN to calculate CSI and/or transmit an SRS reliably and efficiently can be provided.

It will be appreciated by persons skilled in the art that the effects that can be achieved with the present invention are not limited to what has been particularly described hereinabove and other advantages of the present invention will be more clearly understood from the following detailed description taken in conjunction with the accompanying drawings.

## Brief Description of the Drawings

The accompanying drawings, which are included to provide a further understanding of the invention and are incorporated in and constitute a part of this application, illustrate embodiments of the invention and together with the description serve to explain the principle of the invention. In the drawings:

Fig. 1 illustrates a wireless communication system including an evolved Node B (eNB or eNode B), a Relay Node (RN), and User Equipments (UEs);

Fig. 2 illustrates the structure of a radio frame;

Fig. 3 illustrates the structure of a downlink resource grid for the duration of one downlink slot;

Fig. 4 illustrates the structure of a downlink subframe;

Fig. 5 illustrates the structure of an uplink subframe;

Fig. 6 illustrates the configuration of a multi-antenna wireless communication system;

Fig. 7 illustrates downlink Reference Signal (RS) patterns defined for a 3rd Generation Partnership Project Long Term Evolution (3GPP LTE) system;

Fig. 8 is a view referred to for describing RS transmission in an uplink subframe;

Fig. 9 illustrates exemplary partitioning of RN resources;

Fig. 10 illustrates exemplary configuration of a Channel Quality Indicator (CQI) reference resource in an RN;

Fig. 11 illustrates an exemplary method for determining a CQI reference resource in an RN according to the present invention;

Fig. 12 illustrates exemplary determination of Sounding Reference Signal (SRS) transmission subframes in an RN;

Fig. 13 illustrates an exemplary method for determining SRS transmission subframes in an RN according to the present invention;

Fig. 14 is a flowchart illustrating a method for transmitting an uplink signal in an RN according to an embodiment of the present invention; and

Fig. 15 is a block diagram of an RN according to the present invention.

**Best Mode for Carrying Out the Invention**

The embodiments of the present invention described hereinbelow are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or features of any one embodiment may be included in another embodiment and may be replaced with corresponding constructions or features of another embodiment.

In the embodiments of the present invention, a description is made, centering on a data transmission and reception relationship between a Base Station (BS) and a User Equipment (UE). The BS is a terminal node of a network, which communicates directly with a UE. In some cases, a specific operation described as performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with the term 'fixed station', 'Node B', 'evolved Node B (eNode B or eNB)', 'Access Point (AP)', etc. The term 'relay' may be used interchangeably with 'Relay Node (RN)', 'Relay Station (RS)', etc. The term 'terminal' may be replaced with the term 'UE', 'Mobile Station (MS)', 'Mobile Subscriber Station (MSS)', 'Subscriber Station (SS)', etc.

Specific terms used for the embodiments of the present invention are provided to help the understanding of the present invention. These specific terms may be replaced with other terms within the scope and spirit of the present invention.

In some cases, to prevent the concept of the present invention from being ambiguous, known structures and devices will be omitted or will be shown in the form of a block diagram based on main functions of each structure and device. Also, wherever possible, the same reference numbers will be used throughout the drawings and the specification to refer to the same or like parts.

The embodiments of the present invention can be supported by standard documents disclosed for at least one of wireless access systems, Institute of Electrical and Electronics Engineers (IEEE) 802, 3rd Generation Partnership Project (3GPP), 3GPP Long Term Evolution (3GPP LTE), LTE-Advanced (LTE-A), and 3GPP2. Steps or parts that are not described to clarify the technical features of the present invention can be supported by those documents. Further, all terms as set forth herein can be explained by the standard documents.

Techniques described herein can be used in various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved-UTRA (E-UTRA) etc. UTRA is a part of Universal Mobile Telecommunication System (UMTS). 3GPP LTE is a part of Evolved-UMTS (E-UMTS) using E-UTRA. 3GPP LTE employs OFDMA for downlink and SC-FDMA for uplink. LTE-A is an evolution of 3GPP LTE. WiMAX can be described by the IEEE 802.16e standard (Wireless Metropolitan Area Network (WirelessMAN)-OFDMA Reference System) and the IEEE 802.16m standard (WirelessMAN-OFDMA Advanced System). For clarity, this application focuses on the 3GPP LTE/LTE-A system. However, the technical features of the present invention are not limited thereto.

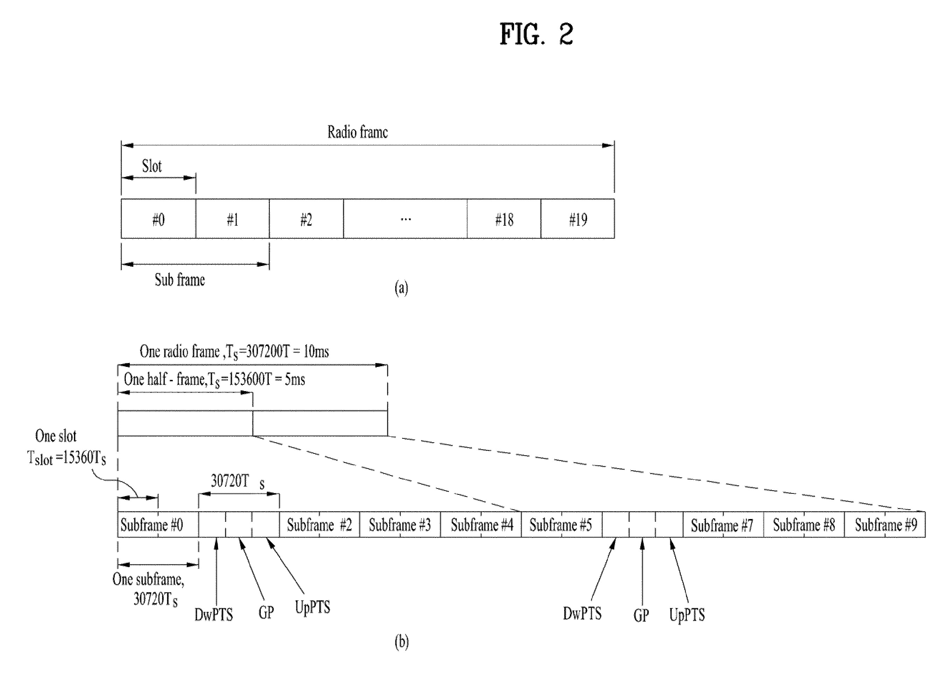

With reference to Fig. 2, the structure of a radio frame will be described below.

In a cellular OFDM wireless packet communication system, Uplink/Downlink (UL/DL) packets are transmitted in subframes. One subframe is defined as a predetermined time period spanning a plurality of Orthogonal Frequency Division Multiplexing (OFDM) symbols. The 3GPP LTE standard supports a type-1 radio frame structure applicable to Frequency Division Duplexing (FDD) and a type-2 radio frame structure applicable to Time Division Duplexing (TDD).

Fig. 2(a) illustrates the type-1 radio frame structure. A DL radio frame is divided into 10 subframes. Each subframe is further divided into two slots in the time domain. A unit time in which one subframe is transmitted is defined as Transmission Time Interval (TTI). For example, one subframe may be 1ms in duration and one slot may be 0.5ms in duration. A slot includes a plurality of OFDM symbols in the time domain and a plurality of Resource Blocks (RBs) in the frequency domain. Because the 3GPP LTE system adopts OFDMA for DL, an OFDM symbol represents one symbol interval. An OFDM symbol may be referred to as an SC-FDMA symbol or symbol interval on the uplink. An RB is a resource allocation unit including a plurality of consecutive subcarriers in one slot.

The number of OFDM symbols in a slot may vary depending on a Cyclic Prefix (CP) configuration. There are an extended CP and a normal CP. For example, if an OFDM symbol is configured with a normal CP, one slot may include 7 OFDM symbols. If an OFDM symbol is configured with an extended CP, the length of the OFDM symbol is increased and thus one slot includes fewer OFDM symbols than in the case of the normal CP. In the case of the extended CP, for example, one slot may include 6 OFDM symbols. If a channel state is unstable as in the case where a UE moves fast, the extended CP may be used to further decrease inter-symbol interference.

In the case of the normal CP, one slot includes 7 OFDM symbols and thus one subframe includes 14 OFDM symbols. The first 2 or 3 OFDM symbols of each subframe may be allocated to a Physical Downlink Control Channel (PDCCH), while the other OFDM symbols may be allocated to a Physical Downlink Shared Channel (PDSCH).

Fig. 2(b) illustrates the type-2 radio frame structure. A type-2 radio frame is divided into 2 half frames, each half frame including 5 subframes, a Downlink Pilot Time Slot (DwPTS), a Guard Period (GP), and an Uplink Pilot Time Slot (UpPTS). One subframe includes 2 slots. The DwPTS is used for a UE to perform initial cell search, synchronization, or channel estimation. The UpPTS is used for an eNB to perform channel estimation and acquire uplink transmission synchronization with a UE. The GP is interposed between a DL and an uplink in order to cancel interference caused to the uplink by multi-path delay of a DL signal. Meanwhile, one subframe is divided into 2 slots irrespective of the type of a radio frame.

This radio frame structure is purely exemplary and thus the number of subframes in a radio frame, the number of slots in a subframe, and the number of symbols in a slot may vary.

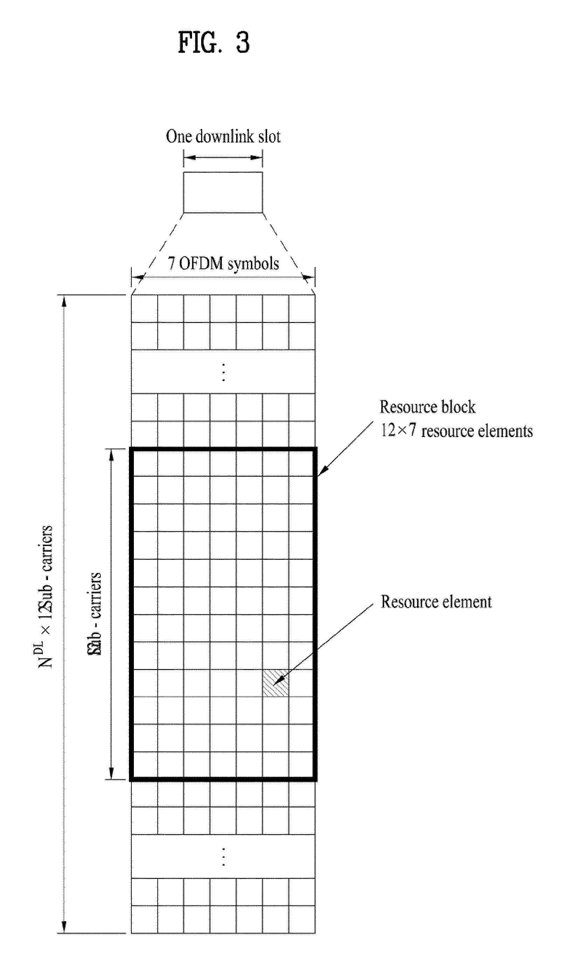

Fig. 3 illustrates the structure of a DL resource grid for the duration of one DL slot. A DL slot has 7 OFDM symbols in the time domain and an RB includes 12 subcarriers in the frequency domain, which does not limit the scope and spirit of the present invention. For example, a DL slot includes 7 OFDM symbols in a subframe with a normal CP, whereas a DL slot includes 6 OFDM symbols in a subframe with an extended CP. Each element of the resource grid is referred to as a Resource Element (RE). An RB includes 12x7 REs. The number of RBs in a DL slot, $N^{DL}$ depends on a DL transmission bandwidth. An uplink slot may have the same structure as a DL slot.

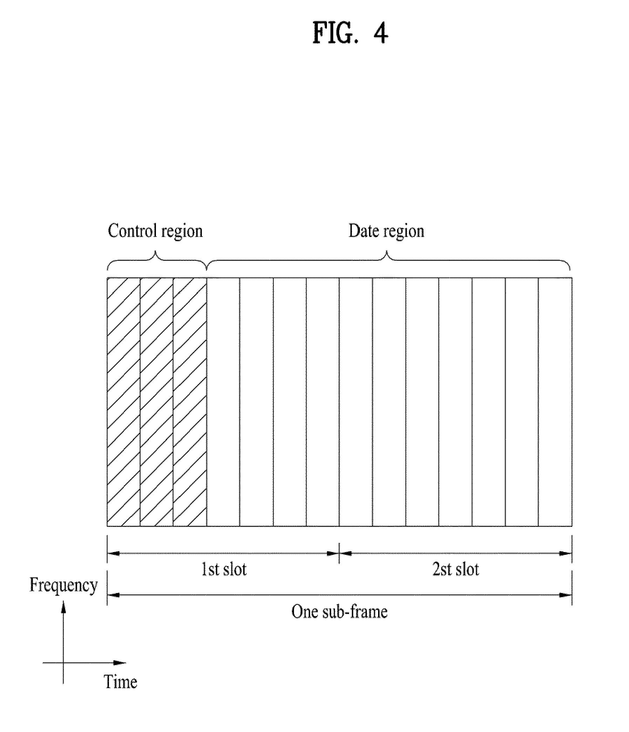

Fig. 4 illustrates a DL subframe structure. Up to 3 OFDM symbols at the start of the first slot in a DL subframe are used for a control region to which control channels are allocated and the other OFDM symbols of the DL subframe are used for a data region to which a PDSCH is allocated. Downlink control channels used in the 3GPP LTE system include a Physical Control Format Indicator Channel (PCFICH), a Physical Downlink Control Channel (PDCCH), and a Physical Hybrid automatic repeat request (ARQ) Indicator Channel (PHICH). The PCFICH is located in the first OFDM symbol of a subframe, carrying information about the number of OFDM symbols used for transmission of control channels in the subframe. The PHICH delivers an HARQ ACKnowledgment/Negative ACKnowledgment (ACK/NACK) signal as a response to an uplink transmission. Control information carried on the PDCCH is called Downlink Control Information (DCI). The DCI transports uplink or DL scheduling information, or uplink transmission power control commands for UE groups. The PDCCH delivers information about resource allocation and a transport format for a Downlink Shared CHannel (DL-SCH), resource allocation information about an Uplink Shared CHannel (UL-SCH), paging information of a Paging Channel (PCH), system information on the DL-SCH, information about resource allocation for a higher-layer control message such as a random access response transmitted on the PDSCH, a set of transmission power control commands for individual UEs of a UE group, transmission power control information, Voice Over Internet Protocol (VoIP) activation information, etc. A plurality of PDCCHs may be transmitted in the control region. A UE may monitor a plurality of PDCCHs. A PDCCH is formed by aggregation of one or more consecutive Control Channel Elements (CCEs). A CCE is a logical allocation unit used to provide a PDCCH at a coding rate based on the state of a radio channel. A CCE includes a set of RE groups. The format of a PDCCH and the number of available bits for the PDCCH are determined according to the correlation between the number of CCEs and a coding rate provided by the CCEs. The number of CCEs used to transmit a PDCCH is called a CCE aggregation level. The CCE aggregation level is a CCE unit in which a PDCCH is detected. The size of the CCE aggregation level is defined as the number of adjacent CCEs. For example, the CCE aggregation level may be 1, 2, 4 or 8.

An eNB determines a PDCCH format according to DCI transmitted to a UE and adds a Cyclic Redundancy Check (CRC) to control information. The CRC is masked by an Identifier (ID) known as a Radio Network Temporary Identifier (RNTI) according to the owner or usage of the PDCCH. If the PDCCH is directed to a specific UE, the CRC of the PDCCH may be masked by a cell-RNTI (C-RNTI) of the UE. If the PDCCH carries a paging message, the CRC of the PDCCH may be masked by a Paging Indicator Identifier (P-RNTI). If the PDCCH carries system information, particularly a System Information Block (SIB), its CRC may be masked by a system information ID and a System Information RNTI (SI-RNTI). To indicate that the PDCCH carries a random access response to a random access preamble transmitted by a UE, its CRC may be masked by a Random Access-RNTI (RA-RNTI).

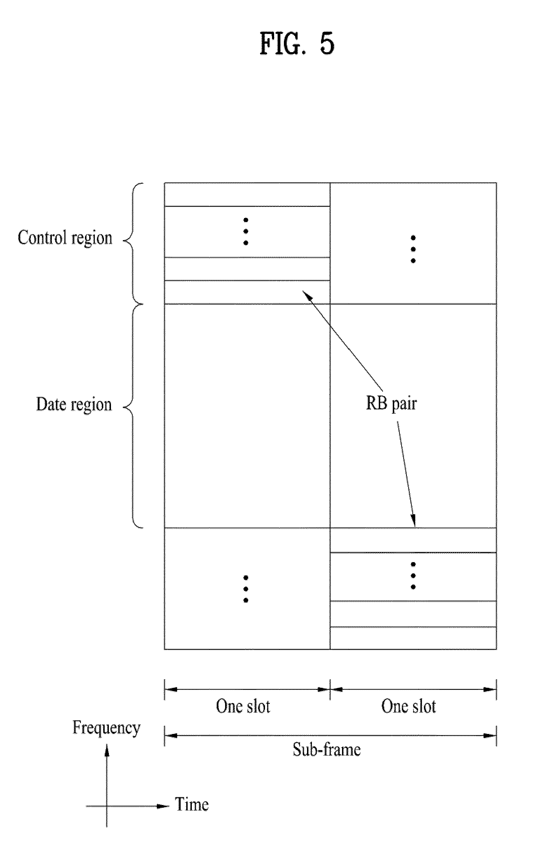

Fig. 5 illustrates an uplink subframe structure. An uplink subframe may be divided into a control region and a data region in the frequency domain. A Physical Uplink Control CHannel (PUCCH) carrying uplink control information is allocated to the control region and a Physical Uplink Shared CHannel (PUSCH) carrying user data is allocated to the data region. To maintain a single-carrier property, a UE does not transmit a PUSCH and a PUCCH simultaneously. A PUCCH for a UE is allocated to an RB pair in a subframe. The RBs of the RB pair occupy different subcarriers in two slots. Thus it is said that the RB pair allocated to the PUCCH is frequency-hopped over a slot boundary.

<u>Modeling of Multiple Input Multiple Output (MIMO) System</u>

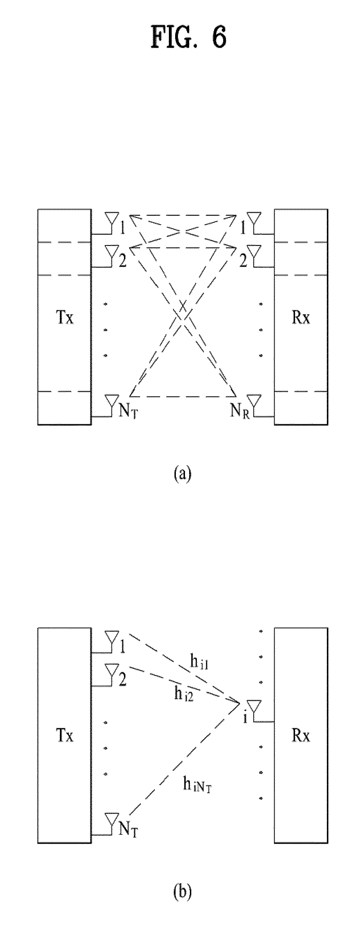

Fig. 6 illustrates the configuration of a MIMO wireless communication system.

Referring to Fig. 6(a), when the number of Transmission (Tx) antennas and the number of Reception (Rx) antennas are increased to $N_T$ and $N_R$, respectively at both a transmitter and a receiver, a theoretical channel transmission capacity increases in proportion to the number of antennas, compared to use of a plurality of antennas at only one of the transmitter and the receiver. Therefore, transmission rate and frequency efficiency can be remarkably increased. Along with the increase of channel transmission capacity, the transmission rate may be increased in theory to the product of a maximum transmission rate $R_o$ that may be achieved by means of a single antenna and a rate increase rate $R_i$.

[Equation 1]

$$R_i = \min(N_T, N_R)$$

For instance, a MIMO communication system with four Tx antennas and four Rx antennas may achieve a four-fold increase in transmission rate theoretically, relative to a single-antenna wireless communication system. Since the theoretical capacity increase of the MIMO wireless communication system was proved in the mid 1990's, many techniques have been actively studied to increase data rate in real implementation. Some of the techniques have already been reflected in various wireless communication standards including standards for 3G mobile communications, future-generation Wireless Local Area Network (WLAN), etc.

Concerning the research trend of MIMO up to now, active studies are underway in many respects of MIMO, inclusive of studies of information theory related to calculation of multi-antenna communication capacity in diverse channel environments and multiple access environments, studies of measuring MIMO radio channels and MIMO modeling, studies of time-space signal processing techniques to increase transmission reliability and transmission rate, etc.

Communication in a MIMO system with $N_T$ Tx antennas and $N_R$ Rx antennas will be described in detail through mathematical modeling.

Regarding a transmission signal, up to $N_T$ pieces of information can be transmitted through the $N_T$ Tx antennas, as expressed as the following vector.

[Equation 2]

$$\mathbf{s} = \left[s_1, s_2, \cdots, s_{N_T}\right]^T$$

A different transmission power may be applied to each piece of transmission information, $S_1, S_2, \cdots, S_{N_T}$. Let the transmission power levels of the transmission information be denoted by $P_1, P_2, \cdots, P_{N_T}$, respectively. Then the transmission power-controlled transmission information vector may be given as

[Equation 3]

$$\hat{\mathbf{s}} = \left[\hat{s}_1, \hat{s}_2, \cdots, \hat{s}_{N_T}\right]^T = \left[P_1 s_1, P_2 s_2, \cdots, P_{N_T} s_{N_T}\right]^T$$

The transmission power-controlled transmission information vector S may be expressed as follows, using a diagonal matrix P of transmission power.

[Equation 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

$N_T$ transmission signals $x_1, x_2, \cdots, x_{N_T}$ may be generated by multiplying the transmission power-controlled information vector $\hat{\mathbf{s}}$ by a weight matrix $\mathbf{W}$. The weight matrix $\mathbf{W}$ functions to appropriately distribute the transmission information to the respective Tx antennas according to transmission channel states, etc. These $N_T$ transmission signals $x_1, x_2, \cdots, x_{N_T}$ are represented as a vector x, which may be determined as

[Equation 5]

$$\mathbf{x} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & \ddots & \\ w_{N_T 1} & w_{N_T 2} & \cdots & w_{N_T N_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W}\hat{\mathbf{s}} = \mathbf{WPs}$$

Here, $w_{ij}$ denotes a weight between an $i^{th}$ Tx antenna and a $j^{th}$ piece of information.

Given $N_R$ Rx antennas, signals received at the Rx antennas, $y_1, y_2, \cdots, y_{N_R}$ may be represented as the following vector.

[Equation 6]

$$\mathbf{y} = \begin{bmatrix} y_1, y_2, \cdots, y_{N_R} \end{bmatrix}^{\mathrm{T}}$$

When channels are modeled in the MIMO wireless communication system, they may be distinguished by the indexes of Tx and Rx antennas. A channel between a $j^{th}$ Tx antenna and an $i^{th}$ Rx antenna is denoted by $h_{ij}$. The index of an Rx antenna precedes the index of a Tx antenna in $h_{ij}$.

Fig. 6(b) illustrates channels from $N_T$ Tx antennas to an $i^{th}$ Rx antenna. The channels may be collectively represented as a vector or a matrix. In Fig. 6(b), the channels from the $N_T$ Tx antennas to the $i^{th}$ Rx antenna may be expressed as [Equation 7].

[Equation 7]

$$\mathbf{h}_i^T = \begin{bmatrix} h_{i1}, h_{i2}, \cdots, h_{iN_T} \end{bmatrix}$$

Hence, all channels from the $N_T$ Tx antennas to the $N_R$ Rx antennas may be expressed as the following matrix.

[Equation 8]

$$\mathbf{H} = \begin{bmatrix} \mathbf{h}_1^{\mathbf{T}} \\ \mathbf{h}_2^{\mathbf{T}} \\ \vdots \\ \mathbf{h}_i^{\mathbf{T}} \\ \vdots \\ \mathbf{h}_{\mathbf{N_R}}^{\mathbf{T}} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix}$$

Actual channels experience the above channel matrix **H** and then are added with Additive White Gaussian Noise (AWGN). The AWGN $n_1, n_2, \cdots, n_{N_R}$ added to the $N_R$ Rx antennas is given as the following vector.
[Equation 9]

$$\mathbf{n} = \begin{bmatrix} n_1, n_2, \cdots, n_{N_R} \end{bmatrix}^{\mathbf{T}}$$

From the above mathematical modeling, the received signal vector is given as
[Equation 10]

$$\mathbf{y} = \begin{bmatrix} y_1 \\ y_2 \\ \vdots \\ y_i \\ \vdots \\ y_{N_R} \end{bmatrix} = \begin{bmatrix} h_{11} & h_{12} & \cdots & h_{1N_T} \\ h_{21} & h_{22} & \cdots & h_{2N_T} \\ \vdots & & \ddots & \\ h_{i1} & h_{i2} & \cdots & h_{iN_T} \\ \vdots & & \ddots & \\ h_{N_R 1} & h_{N_R 2} & \cdots & h_{N_R N_T} \end{bmatrix} \begin{bmatrix} x_1 \\ x_2 \\ \vdots \\ x_j \\ \vdots \\ x_{N_T} \end{bmatrix} + \begin{bmatrix} n_1 \\ n_2 \\ \vdots \\ n_i \\ \vdots \\ n_{N_R} \end{bmatrix} = \mathbf{Hx} + \mathbf{n}$$

The numbers of rows and columns in the channel matrix **H** representing channel states are determined according to the numbers of Rx antennas and Tx antennas. Specifically, the number of rows in the channel matrix **H** is equal to the number of Rx antennas, $N_R$ and the number of columns in the channel matrix **H** is equal to the number of Tx antennas, $N_T$. Hence, the channel matrix **H** is of size $N_R \times N_T$.

The rank of a matrix is defined as the smaller between the number of independent rows and the number of independent columns in the matrix. Accordingly, the rank of the matrix is not larger than the number of rows or columns of the matrix. The rank of the channel matrix **H,** *rank*(**H**) satisfies the following constraint.
[Equation 11]

$$rank(\mathbf{H}) \leq \min(N_T, N_R)$$

The rank of a matrix may also be defined as the number of non-zero eigenvalues, when the matrix is decomposed by EigenValue Decomposition (EVD). Similarly, the rank of a matrix may be defined as the number of non-zero singular values, when the matrix is decomposed by Singular Value Decomposition (SVD). Therefore, the rank of a channel matrix may be the maximum number of different pieces of information that can be transmitted on a physical channel, in its physical meaning.

In the present disclosure, the 'rank' of MIMO transmission is the number of paths in which signals can be transmitted independently at a specific time in specific frequency resources, and the 'number of layers' is the number of signal streams transmitted in the respective paths. In general, since a transmitter transmits as many layers as the rank of signal transmission, the rank and the number of layers are used in the same meaning, unless otherwise mentioned.

Reference Signal (RS)

In a wireless communication system, a packet is transmitted on a radio channel. In view of the nature of the radio channel, the packet may be distorted during transmission. To receive the signal successfully, a receiver should compensate for the distortion of the received signal using channel information. Generally, to enable the receiver to acquire the channel information, a transmitter transmits a signal known to both the transmitter and the receiver and the receiver acquires knowledge of channel information based on the distortion degree of the signal received on the radio channel. This signal is called a pilot signal or an RS.

In the case of data transmission and reception through multiple antennas, knowledge of channel states between Tx antennas and Rx antennas is required for successful signal reception. Accordingly, an RS should exist for each Tx antenna.

Downlink RSs are categorized into Common RS (CRS) shared among all UEs and Dedicated RS (DRS) specific to a particular UE. These RSs may deliver information for channel estimation and demodulation.

A receiver (i.e. a UE) may feed back a channel quality-related indicator such as a Channel Quality Indicator (CQI), a Precoding Matrix Index (PMI), and/or a Rank Indicator (RI) to a transmitter (i.e. an eNB) by estimating channel states using CRSs. The CRS is also called a cell-specific RS. An RS related to feedback of Channel State Information (CSI) such as a CQI/PMI/RI may be separately defined as a CSI-RS.

A DRS may be transmitted on a predetermined RE, when data transmitted on a PDSCH needs to be demodulated. A higher layer may notify a UE whether a DRS exists and also notify the UE that only when a related PDSCH is mapped, the DRS is valid. The DRS is also called a UE-specific RS or Demodulation Reference Signal (DMRS).

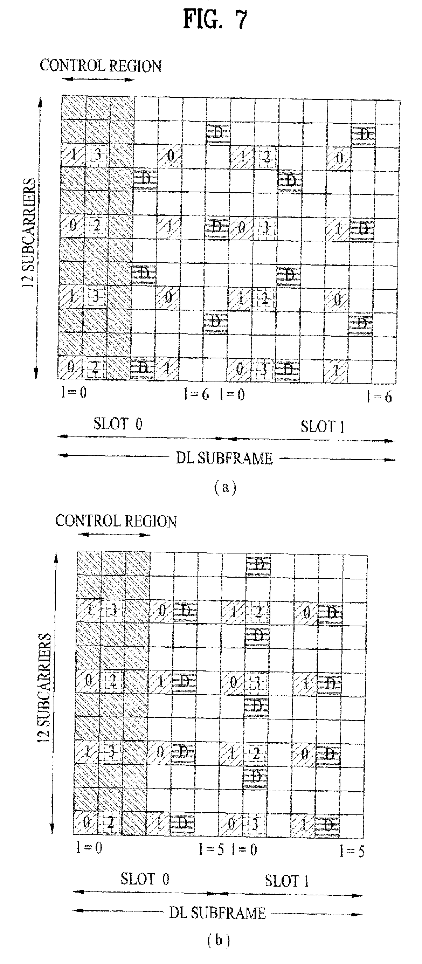

Fig. 7 illustrates patterns in which CRSs and DRSs are mapped to a DL RB, as defined in a conventional 3GPP LTE system (e.g. conforming to Release-8). An RS mapping unit, i.e. a DL RB may include one subframe in time by 12 subcarriers in frequency. That is, an RB includes 14 OFDM symbols in time in the case of a normal CP (see FIG. 7(a)) and 12 OFDM symbols in time in the case of an extended CP (see FIG. 7(b)).

In Fig. 7, the positions of RSs in an RB pair for a system where an eNB supports four Tx antennas are illustrated. REs labeled with '0', '1', '2' and '3' are the positions of CRSs for first to fourth antenna ports, antenna port 0 to antenna port 3, respectively, and REs labeled with 'D' denote the positions of DRSs.

The CRS will first be described below in detail.

CRSs are used for estimating channels of physical antenna ends. The CRSs are common to all UEs within a cell, distributed across a total frequency band. The CRSs may also serve the purpose of CSI acquisition and data demodulation.

CRSs are configured in various manners depending on the antenna configuration of a transmitter (i.e. an eNB). The 3GPP LTE system (e.g. conforming to Release-8) supports a variety of antenna configurations and DL transmitters (i.e. eNBs) have three antenna configurations, 1-Tx, 2-Tx and 4-Tx. In 1-Tx transmission, an eNB allocates an RS for a single antenna port. In 2-Tx transmission, the eNB allocates RSs for two antenna ports in Time Division Multiplexing (TDM) and/or Frequency Division Multiplexing (FDM). That is, RSs for two antenna ports are allocated to different time resources and/or different frequency resources and thus distinguished from each other by time and/or frequency. In 4-Tx transmission, the eNB allocates RSs for four antenna ports in TDM/FDM. Channel information that a DL receiver (i.e. a UE) estimates from CRSs may be used for demodulation of data transmitted in a transmission scheme such as single antenna transmission, transmit diversity, closed-loop spatial multiplexing, open-loop spatial multiplexing, Multi-User MIMO (MU-MIMO), etc.

When multiple antennas are supported, an antenna port transmits an RS on predetermined REs according to an RS pattern, while transmitting no signal on REs designated for the other antenna ports.

CRSs are mapped to an RB according to the following rule described as

[Equation 12]

$$k = 6m + \left(v + v_{\text{shift}}\right) \bmod 6$$

$$l = \begin{cases} 0, N_{\text{symb}}^{\text{DL}} - 3 & \text{if } p \in \{0,1\} \\ 1 & \text{if } p \in \{2,3\} \end{cases}$$

$$m = 0,1,\ldots,2 \cdot N_{\text{RB}}^{\text{DL}} - 1$$

$$m' = m + N_{\text{RB}}^{\text{max,DL}} - N_{\text{RB}}^{\text{DL}}$$

$$v = \begin{cases} 0 & \text{if } p = 0 \text{ and } l = 0 \\ 3 & \text{if } p = 0 \text{ and } l \neq 0 \\ 3 & \text{if } p = 1 \text{ and } l = 0 \\ 0 & \text{if } p = 1 \text{ and } l \neq 0 \\ 3(n_s \bmod 2) & \text{if } p = 2 \\ 3 + 3(n_s \bmod 2) & \text{if } p = 3 \end{cases}$$

$v_{\text{shift}} = N_{\text{ID}}^{\text{cell}} \bmod 6$

In [Equation 12], k denotes a subcarrier index, *l* denotes a symbol index, *p* denotes an antenna port index, $N_{symb}^{DL}$ denotes the number of OFDM symbols in a DL slot, $N_{\text{RB}}^{\text{DL}}$ denotes the number of allocated DL RBs, $n_s$ denotes a slot index, $N_{\text{ID}}^{\text{cell}}$ denotes a cell ID, and mod represents a modulo operation. The positions of RSs in the frequency domain depend on the value of $V_{\text{shift}}$ and $V_{\text{shift}}$ in turn depends on the cell ID. Therefore, the positions of RSs have different frequency shift values in different cells.

Specifically, to increase channel estimation performance using CRSs, the positions of CRSs of each cell may be shifted along the frequency axis by a frequency shift value specific to the cell, so that different cells have CRSs at different positions. For example, when an RS is positioned on every three subcarriers, one cell may allocate an RS to subcarrier 3k, whereas another cell may allocate an RS to subcarrier (3k+1). From the perspective of one antenna port, an RS is allocated to every 6 REs (i.e. a 6-subcarrier spacing) in the frequency domain, 3 REs apart from an RE to which an RS is allocated for another antenna port.

Power boosting may be applied to CRSs. Power boosting refers to transmission of an RS with higher power than power originally allocated to an RE for the RS by lowering the power of a non-RS RE.

In the time domain, RSs are positioned at every predetermined interval in the time domain, starting from symbol 0 (1=0) in each slot. The interval varies with a CP length. RSs are positioned in symbols 0 and 4 in a slot of a subframe with a normal CP, and RSs are positioned in symbols 0 and 3 in a slot of a subframe with an extended CP. For one OFDM symbol, only RSs for up to two antenna ports are defined. Therefore, in 4-Tx transmission, RSs for antenna port 0 and antenna port 1 are positioned in symbol 0 and symbol 4 (in symbol 0 and symbol 3 in a subframe with an extended CP) and RSs for antenna port 2 and antenna port 3 are positioned in symbol 1 in a slot. One thing to note herein is that the frequency positions of the RSs for antenna port 2 and antenna port 3 are exchanged in a second slot.

To support higher spectral efficiency than the conventional 3GPP LTE system (e.g. conforming to Release-8), a system having an extended antenna configuration (e.g. an LTE-A system) may be designed. The extended antenna configuration may be, for example, an 8-Tx antenna configuration. This system having the extended antenna configuration needs to support UEs operating in the conventional antenna configurations, that is, to ensure backward compatibility. Therefore, it is necessary to design a new RS pattern for the additional antenna configuration, while supporting RS patterns for the conventional antenna configurations. If CRSs are added for new antenna ports in the system having the conventional antenna configurations, RS overhead rapidly increases, thereby decreasing data rate. An evolution of 3GPP LTE, the LTE-A system may introduce additional RSs called CSI-RSs for measuring the channel state information of new antenna ports.

Now a detailed description will be given of DRSs.

A DRS (or a UE-specific RS) is used for data demodulation. For transmission through multiple antennas, a precoding weight used for a particular UE is still applied to RSs such that when the UE receives the RSs, it may estimate equivalent channels in which the precoding weight applied to the respective Tx antennas are combined with transmission channels.

The conventional 3GPP LTE system (e.g. conforming to Release-8) supports transmission through up to four Tx antennas and defines a DRS for rank-1 beamforming. The DRS for rank-1 beamforming is represented as an RS for antenna port 5. DRSs are mapped to an RB according to [Equation 13] in the case of a normal CP and according to [Equation 14] in the case of an extended CP.

[Equation 13]

$$k = (k') \bmod N_{\text{sc}}^{\text{RB}} + N_{\text{sc}}^{\text{RB}} \cdot n_{\text{PRB}}$$

$$k' = \begin{cases} 4m' + v_{\text{shift}} & \text{if } l \in \{2,3\} \\ 4m' + (2 + v_{\text{shift}}) \bmod 4 & \text{if } l \in \{5,6\} \end{cases}$$

$$l = \begin{cases} 3 & l' = 0 \\ 6 & l' = 1 \\ 2 & l' = 2 \\ 5 & l' = 3 \end{cases}$$

$$l' = \begin{cases} 0,1 & \text{if } n_s \bmod 2 = 0 \\ 2,3 & \text{if } n_s \bmod 2 = 1 \end{cases}$$

$$m' = 0,1,\ldots,3 N_{\text{RB}}^{\text{PDSCH}} - 1$$

$v_{\text{shift}} = N_{\text{ID}}^{\text{cell}} \bmod 3$

[Equation 14]

$$k = (k') \bmod N_{\text{sc}}^{\text{RB}} + N_{\text{sc}}^{\text{RB}} \cdot n_{\text{PRB}}$$

$$k' = \begin{cases} 3m' + v_{\text{shift}} & \text{if } l = 4 \\ 3m' + (2 + v_{\text{shift}}) \bmod 3 & \text{if } l = 1 \end{cases}$$

$$l = \begin{cases} 4 & l' \in \{0,2\} \\ 1 & l' = 1 \end{cases}$$

$$l' = \begin{cases} 0 & \text{if } n_s \bmod 2 = 0 \\ 1,2 & \text{if } n_s \bmod 2 = 1 \end{cases}$$

$$m' = 0,1,\ldots,4 N_{\text{RB}}^{\text{PDSCH}} - 1$$

$v_{\text{shift}} = N_{\text{ID}}^{\text{cell}} \bmod 3$

In [Equation 13] and [Equation 14], k is a subcarrier index, *l* is a symbol index, *p* is the index of an antenna port, $N_{SC}^{RB}$ is the frequency-domain size of an RB expressed as the number of subcarriers, $n_{PRB}$ is the number of a Physical Resource Block (PRB), $N_{RB}^{PDSCH}$ is the bandwidth of an RB used for transmitting a PDSCH, $n_s$ is the index of a slot, $N_{ID}^{cell}$ is a cell ID, and mod represents a modulo operation. The position of an RS in the frequency domain depends on the value of $V_{\text{shift}}$ and $V_{\text{shift}}$ in turn depends on the cell ID. Therefore, the positions of RSs have different frequency shift values in different cells.

High-order MIMO, multi-cellular transmission, and advanced MU-MIMO are under consideration for the LTE-A system. Particularly, DRS-based data demodulation is considered in order to support efficient use of RSs and an advanced transmission scheme. Aside from a DRS for rank-1 beamforming (for antenna port 5) defined in the conventional 3GPP LTE system such as one conforming to Release-8, the LTE-A system may define DRSs for two or more layers to support data transmission through additional antennas.

<u>Cooperative Multi-Point (CoMP)</u>

To satisfy enhanced system performance requirements for the 3GPP LTE-A system, CoMP transmission and reception technology known as co-MIMO, collaborative MIMO or network MIMO has been proposed. CoMP can increase the performance of UEs located at a cell edge and average sector throughput.

It is known that Inter-Cell Interference (ICI) may degrade the performance of a UE at a cell edge and decrease an average sector throughput in a multi-cellular environment with a frequency reuse factor of 1. To offer an appropriate throughput performance to a cell-edge UE in an environment constrained by interference, a simple ICI mitigation technique such as UE-specific power control-based Fractional Frequency Reuse (FFR) is used in the conventional LTE system. However, it may be preferred to reduce the ICI or reuse the ICI as a desired signal for the UE, rather than to decrease the utilization of frequency resources per cell. For this purpose, CoMP transmission techniques may be adopted.

Downlink CoMP schemes are classified largely into Joint Processing (JP) and Coordinated Scheduling/Beamforming (CS/CB).

According to the JP scheme, each point (eNB) of a CoMP cooperation unit may use data. The CoMP cooperation unit refers to a set of eNBs used for a CoMP transmission operation. The JP scheme is further branched into joint transmission and dynamic cell selection.

Joint transmission is a technique of transmitting PDSCHs from a plurality of points (a part or the whole of a CoMP cooperation unit) at one time. That is, a plurality of transmission points may simultaneously transmit data to a single UE. The joint transmission scheme can improve the quality of a received signal coherently or non-coherently and actively eliminate interference to other UEs, as well.

Dynamic cell selection is a technique of transmitting a PDSCH from one point of a CoMP cooperation unit at one time. That is, one point of the CoMP cooperation unit transmits data to a single UE at a given time point, while the other points of the CoMP cooperation unit do not transmit data to the UE at the time point. A point to transmit data to a UE may be dynamically selected.

Meanwhile, in the CS/CB scheme, a CoMP cooperation unit may perform cooperative beamforming for data transmission to a single UE. While only a serving cell transmits data to the UE, user scheduling/beamforming may be determined through coordination among cells of the CoMP cooperation unit.

Uplink CoMP reception refers to uplink reception of a transmitted signal through coordination at a plurality of geographically separated points. Uplink CoMP schemes include Joint Reception (JR) and Coordinated Scheduling/ Beamforming (CS/CB).

In JR, a plurality of reception points receive a signal transmitted on a PUSCH. CS/CB is a technique in which while only one point receives a PUSCH, user scheduling/beamforming is determined through coordination among cells of a CoMP cooperation unit.

<u>Sounding Reference Signal (SRS)</u>

An SRS is used for an eNB to measure channel quality and perform uplink frequency-selective scheduling based on the channel quality measurement. The SRS is not associated with uplink data and/or control information transmission. However, the usages of the SRS are not limited thereto. The SRS may also be used for enhanced power control or for supporting various start-up functions of unscheduled UEs. The start-up functions may include, for example, an initial Modulation and Coding Scheme (MCS), initial power control for data transmission, timing advance, and frequency non-selective scheduling (frequency non-selective scheduling refers to a type of scheduling in which a transmitter selectively allocates a frequency resource to the first slot of a subframe and then pseudo-randomly hops to another frequency resource in the second slot of the subframe).

The SRS may be used for measuring DL channel quality on the assumption of the reciprocity of a radio channel between the DL and the uplink. This assumption is valid especially in a TDD system in which the DL and the uplink share the same frequency band and are distinguished by time.

A subframe in which a UE within a cell is supposed to transmit an SRS is indicated by cell-specific broadcast signaling. A 4-bit cell-specific parameter 'srsSubframeConfiguration' indicates 15 possible configurations for subframes carrying SRSs in each radio frame. These configurations may provide flexibility with which SRS overhead can be adjusted according to network deployment scenarios. The other one configuration (a 16th configuration) represented by the parameter is perfect switch-off of SRS transmission in a cell, suitable for a cell serving high-speed UEs, for example.

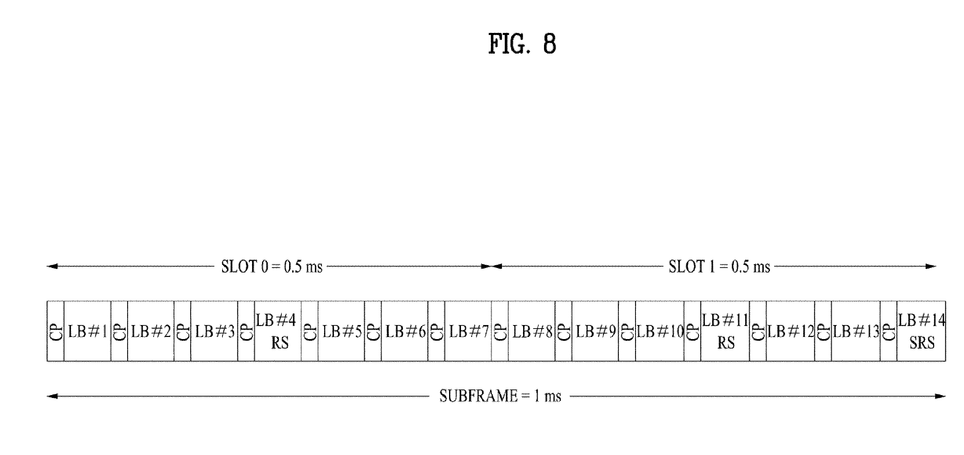

Referring to Fig. 8, an SRS is always transmitted in the last SC-FDMA symbol of a configured subframe. Therefore, an SRS and a DMRS are positioned in different SC-FDMA symbols. PUSCH data transmission is not allowed in an SC-FDMA symbol designated for SRS transmission. Accordingly, even the highest sounding overhead (in the case where SRS symbols exist in all subframes) does not exceed 7%.

Each SRS symbol is generated for a given time unit and frequency band, using a base sequence (a random sequence or Zadoff-Chu (ZC)-based sequence set), and all UEs within a cell use the same base sequence. SRS transmissions in the same time unit and the same frequency band from a plurality of UEs within a cell are distinguished orthogonally by different cyclic shifts of the base sequence allocated to the plurality of UEs. Although the SRS sequences of different cells may be distinguished by allocating different base sequences to the cells, orthogonality is not ensured between the different base sequences.

Relay Node

Use of RNs may be considered, for example, for the purpose of extending the coverage of high data rates, enhancing group mobility, deploying a temporary network, improving cell-edge throughput, and/or providing network coverage in new areas.

An RN forwards data between an eNB and a UE. Two types of links having different characteristics in respective carrier frequency bands (a backhaul link and an access link) are established for the RN. The eNB may cover a donor cell. The RN is connected wirelessly to a wireless access network through the donor cell.

If the backhaul link between the eNB and the RN uses a DL frequency band or DL subframe resources, it is called a backhaul DL. If the backhaul link uses a UL frequency band or UL subframe resources, it is called a backhaul UL. The frequency bands are FDD resources and the subframes are TDD resources. Likewise, if the access link between the RN and the UE(s) uses a DL frequency band or DL subframe resources, it is called an access DL. If the access link uses a UL frequency band or UL subframe resources, it is called an access UL.

The functions of UL reception and DL reception are required for an eNB and the functions of UL transmission and DL reception are required for a UE. For an RN, the functions of backhaul UL transmission to an eNB, access UL reception from a UE, backhaul DL reception from the eNB, and access DL transmission to the UE are required.

With respect to the RN's usage of a frequency band (or spectrum), its operation can be classified into 'in-band' and 'out-band'. For an in-band RN, a backhaul link shares the same frequency band with an access link. If the backhaul link and the access link operate in different frequency bands, the RN is an out-band RN. In both in-band and out-band relaying, a UE (hereinafter, referred to as a legacy UE) operating in the conventional LTE system such as one conforming to Release-8 should be able to access a donor cell.

Depending on whether a UE is aware of the existence of an RN, RNs may be classified into a transparent RN and a non-transparent RN. If the UE does not perceive whether it communicates with a network via an RN, the RN is a transparent RN. In contrast, if the UE perceives whether it communicates with a network via an RN, the RN is a non-transparent RN.

In relation to control of RNs, RNs may be classified into an RN configured as a part of a donor cell and an RN that self-controls a cell.

The former RN may have an RN ID, although it does not have its own cell ID. If at least a part of Radio Resource Management (RRM) is controlled by an eNB covering the donor cell, the RN is regarded as configured as a part of the donor cell (even though the other parts of the RRM reside in the RN). Preferably, this RN can support legacy UEs. For instance, smart repeaters, decode-and-forward relays, Layer 2 (L2) relays, and Type-2 relays form a part of a donor cell.

The latter RN controls one or more cells. The cells are allocated their unique physical cell IDs and they may use the same RRM mechanism. From the viewpoint of a UE, there is no distinction between accessing a cell controlled by an RN and accessing a cell controlled by a macro eNB. Preferably, a cell controlled by this type of RN may support legacy UEs. For example, RNs of this type include self-backhauling RNs, Layer 3 (L3) relays, Type-1 relays, and Type-1a relays.

A Type-1 relay is an in-band RN that controls a plurality of cells. Each of the plurality of cells appears to a UE as a separate cell distinct from a donor cell. The plurality of cells have their own physical cell IDs (as defined in LTE Release-8) and the RN can transmit its own synchronization channel, RSs, etc. During a single-cell operation, a UE may receive scheduling information and an HARQ feedback directly from the RN and transmit its control channels (a Scheduling Request (SR), a CQI, an ACK/NACK, etc.) to the RN. The Type-1 relay appears as a legacy eNB (operating in conformance to LTE Release-8) to a legacy UE (conforming to LTE Release-8). That is, the Type-1 relay has backward compatibility. On the other hand, to LTE-A UEs, the Type-1 relay appears different from a legacy eNB. Thus the Type-1 relay can enhance performance.

Except for its out-band operation, a Type-1a relay has the same features as the Type-1 relay. The Type-1a relay may be configured such that the influence of its operation on an L1 operation is minimized or eliminated.

A Type-2 relay is an in-band RN that does not have its own physical cell ID and thus does not form a new cell. Since the Type-2 relay is transparent to legacy UEs, the legacy UEs do not notice the existence of the Type-2 relay. The Type-2 relay can transmit a PDSCH but does not transmit at least a CRS and a PDCCH.

In order to allow in-band relaying, some resources in the time-frequency domain should be set aside for a backhaul link and these resources may be configured not to be used for an access link. This is called resource partitioning.

A description will be given of the general principle of resource partitioning at an RN. A backhaul DL and an access DL may be TDM-multiplexed in one carrier frequency (that is, only one of the backhaul DL and the access DL is active at a specific time). Similarly, a backhaul UL and an access UL may be TDM-multiplexed in one carrier frequency (that is, only one of the backhaul UL and the access UL is active at a specific time).

Multiplexing of backhaul links in FDD is performed such that backhaul DL transmission and backhaul UL transmission take place in a DL frequency band and a UL frequency band, respectively. In comparison, multiplexing of backhaul links in TDD is performed such that backhaul DL transmission and backhaul UL transmission take place in a DL subframe band between an eNB and an RN and a UL subframe between the eNB and the RN, respectively.

In the case of an in-band RN, for example, if backhaul DL reception from an eNB and access DL transmission to a UE are performed simultaneously in the same frequency band, a signal transmitted from the transmitter of the RN may be received at the receiver of the RN. As a result, signal interference or Radio Frequency (RF) jamming may occur at the RF front-end of the RN. Likewise, if access UL reception from a UE and backhaul UL transmission to an eNB take place simultaneously in the same frequency band, the RF front-end of the RN may experience signal interference. Therefore, simultaneous eNB-to-RN and RN-to-UE transmissions in the same frequency band may not be feasible unless a reception signal and a transmission signal are sufficiently isolated from each other, for example, a Tx antenna is geographically apart enough from an Rx antenna (e.g. on the ground/underground).

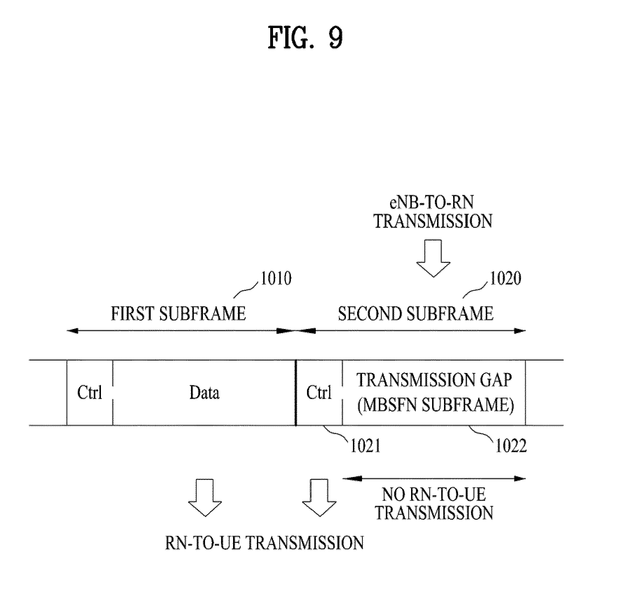

One way to handle the signal interference is to operate the RN such that while the RN is receiving a signal from a donor cell, it is not transmitting signals to UEs. That is, a gap is created in the RN-to-UE transmission and UEs (including legacy UEs) are not supposed to expect any RN transmission during the gap. In Fig. 9, a first subframe 1010 is a general subframe carrying a DL (i.e. an access DL) control signal and data from an RN to a UE, and a second subframe 1020 is a Multicast Broadcast Single Frequency Network (MBSFN) subframe that carries a control signal from the RN to the UE in a control region 1021 but does not carry a signal from the RN to the UE in the remaining region 1022 of the MBSFN subframe. Since a legacy UE expects reception of a PDCCH in every DL subframe (that is, the RN needs to support legacy UEs' reception of a PDCCH and measurement using the PDCCH within its coverage), a PDCCH needs to be transmitted in every DL subframe, for reliable operation of the legacy UEs. Accordingly, the RN needs to perform access DL transmission, instead of backhaul DL reception, even in the first N (N=1, 2 or 3) OFDM symbols of a subframe set for DL transmission (i.e. backhaul DL transmission) from the eNB to the RN, that is, in the second subframe 1020. In this context, a PDCCH is transmitted from the RN to a UE in the control region 1021 of the second subframe 1020, thereby providing backward compatibility to legacy UEs served by the RN. While no RN-to-UE transmission takes place in the remaining region 1022 of the second subframe 1020, the RN can receive a signal from the eNB in the remaining region 1022. This frequency partitioning prevents simultaneous access DL transmission and backhaul DL reception at an in-band RN.

The second subframe 1020 being an MBSFN subframe will be detailed below. The MBSFN subframe is basically a subframe for MBMS. MBMS refers to a service of transmitting the same signal simultaneously from a plurality of cells. The control region 1021 of the second subframe 1020 may be referred to as a relay non-hearing period. During the relay non-hearing period, the RN transmits an access DL signal without receiving a backhaul DL signal. As stated before, the relay non-hearing period may be set to be 1, 2 or 3 OFDM symbols long. The RN may perform access DL transmission to a UE during the relay non-hearing period 1021 and perform backhaul DL reception from the eNB in the remaining region 1022. Because the RN is not allowed to perform simultaneous transmission and reception in the same frequency band, the RN takes a certain time to transition from a Tx mode to an Rx mode. Therefore, it is necessary to set a Guard Time (GT) in which the RN can switch from the Tx mode to the Rx mode in a starting period of the backhaul DL reception region 1022. When the RN performs backhaul DL reception from the eNB and access DL transmission to a UE, a GT may also be set for switching from the Rx mode to the Tx mode of the RN. The length of the GT may be given as a time-domain value, for example, k (k≥1) time samples (Ts) or one or more OFDM symbols. If successive backhaul DL subframes are configured for the RN according to a specific subframe timing alignment relationship, a GT may not be defined or set in the last part of a subframe. To maintain backward compatibility, the GT may be defined only in a frequency area set for backhaul DL subframe transmission (if a GT is set in an access DL period, legacy UEs may not be supported). The RN may receive a PDCCH and a PDSCH from the eNB in the backhaul DL reception period 1022 except for the GT. The PDCCH transmitted to the RN by the eNB in the data region (the transmission gap in Fig. 9) of the backhaul DL subframe may be referred to as a Relay-PDCCH (R-PDCCH), distinguishably from a conventional PDCCH.

A detailed description will be given below of subframe configurations for eNB-to-RN transmission, separately according to frame structures (frame structure type 1 (FDD) and frame structure type 2 (TDD)).

As described before, time-frequency resources may be configured for transmission between an eNB and an RN (i.e. eNB-RN transmission) by time-multiplexing eNB-RN transmission with transmission between the RN and a UE (i.e. RN-UE transmission). A higher layer may configure subframes for eNB-RN transmission. The RN may set the DL subframes configured for eNB-RN transmission as MBSFN subframes. Transmission from an eNB to an RN (i.e. eNB-to-RN transmission) may be performed in a DL subframe and transmission from the RN to the eNB (i.e. RN-to-eNB transmission) may be performed in a UL frequency subframe. In frame structure type 1 (TDD), eNB-to-RN transmission and RN-to-UE transmission take place in a DL frequency band and RN-to-eNB transmission and UE-to-RN transmission take place in a UL frequency band.

In frame structure type 1, a subframe configured for eNB-to-RN transmission may satisfy the following equation.

[Equation 15]

$$\left[\left(10 \cdot n_f + \lfloor n_s / 2 \rfloor\right) \bmod 8\right] \in \Delta_{BSC}$$

In [Equation 15], $n_f$ is a System Frame Number (SFN) and $n_s$ is the index of a slot in a radio frame. Both $n_f$ and $n_s$ represent the cell timing of the eNB. Exceptionally, a DL subframe that cannot be configured as an MBSFN subframe is not configured for eNB-to-RN transmission in an RN cell. A set $\Delta_{BSC}$ is determined to be the union of available offset values for a parameter *SubframeConfigurationFDD* illustrated in [Table 1] below.

[Table 1]

| SubframeConfigurationFDD | Offset value element of $\Delta_{BSC}$ |
|---|---|
| {xxxxxxx1} | 7 |
| {xxxxxx1x} | 6 |
| {xxxxx1xx} | 5 |
| (xxxx1xxx} | 4 |
| {xxx1xxxx} | 3 |
| {xx1xxxxx} | 2 |
| {x1xxxxxx} | 1 |
| {1xxxxxxx} | 0 |

[Table 1] illustrates DL configurations for eNB-to-RN transmission in frame structure type 1. In [Table 1], the parameter *SubframeConfigurationFDD* is set by a higher layer and x denotes a bit having a specific value (0 or 1) in a bitmap.

If subframe n-4 is configured as a subframe for eNB-to-RN transmission (i.e. backhaul DL transmission), the subframe may be configured for RN-to-eNB transmission (backhaul UL transmission).

[Table 2] illustrates available subframes for eNB-RN transmission in frame structure type 2.

[Table 2]

| SubframeConfigurationTDD | eNB-RN uplink-downlink configuration | Subframe number n | | | | | | | | | |
|---|---|---|---|---|---|---|---|---|---|---|---|
| | | 0 | 1 | 2 | 3 | 4 | 5 | 6 | 7 | 8 | 9 |
| 0 | 1 | | | | | D | | | | U | |
| 1 | | | | U | | | | | | | D |
| 2 | | | | | | D | | | | U | D |
| 3 | | | | | U | D | | | | | D |
| 4 | | | | | U | D | | | | U | D |
| 5 | 2 | | | U | | | | | | D | |
| 6 | | | | | D | | | | U | | |
| 7 | | | | U | | D | | | | D | |
| 8 | | | | | D | | | | U | | D |
| 9 | | | | U | D | D | | | | D | |
| 10 | | | | | D | | | | U | D | D |
| 11 | 3 | | | | U | | | | D | | D |
| 12 | | | | | U | | | | D | D | D |
| 13 | 4 | | | | U | | | | | | D |
| 14 | | | | | U | | | | D | | D |
| 15 | | | | | U | | | | | D | D |
| 16 | | | | | U | | | | D | D | D |
| 17 | | | | | U | D | | | D | D | D |
| 18 | 6 | | | | | U | | | | | D |

In [Table 2], subframes labeled with 'D' are DL subframes for eNB-to-RN transmission and subframes labeled with 'U' are UL subframes for RN-to-eNB transmission, among 10 subframes of one radio frame (subframe 0 to subframe 9). A parameter *SubframeConfigurationTDD* may be set by a higher layer. [Table 2] represents UL-DL configurations supported for an eNB-RN link as a function of the parameter *SubframeConfigurationTDD.*

Channel State Information (CSI)

MIMO schemes may be classified into open-loop MIMO and closed-loop MIMO. In open-loop MIMO, a MIMO transmitter performs MIMO transmission without receiving a CSI feedback from a MIMO receiver. On the other hand, the MIMO transmitter receives a CSI feedback from the MIMO receiver and performs MIMO transmission based on the CSI feedback in closed-loop MIMO. To achieve the multiplexing gain of MIMO Tx antennas, the transmitter and the receiver each may perform beamforming based on CSI in the closed-loop MIMO scheme. To enable the receiver (e.g. a UE, or an RN as a backhaul DL reception entity) to feed back CSI, the transmitter (e.g. an eNB, or an RN as an access DL transmission entity) may allocate a UL control channel or a UL shared channel to the receiver.

A CSI feedback may include an RI, a PMI, and a CQI.

An RI is information about a channel rank. The channel rank is the maximum number of layers (or streams) that may carry different information in the same time-frequency resources. Because the rank is determined mainly according to the long-term fading of a channel, the RI may be fed back in a longer period (i.e. less frequently) than a PMI and a CQI.

A PMI is information about a precoding matrix used for transmission of a transmitter, reflecting the spatial characteristics of channels. Precoding refers to mapping transmission layers to Tx antennas. A layer-antenna mapping relationship may be determined according to a precoding matrix. The PMI is the index of an eNB precoding matrix preferred by the receiver (e.g. a UE or an RN), selected based on a metric such as Signal-to-Interference plus Noise Ratio (SINR), etc. In order to reduce the feedback overhead of precoding information, the transmitter and the receiver may share a codebook with a plurality of precoding matrices and the receiver may feed back only the index of a specific precoding matrix in the codebook.

A CQI is information representing a channel quality or a channel strength. The CQI may be expressed as a predetermined MCS. That is, a feedback CQI index indicates a corresponding modulation scheme and coding rate. In general, the CQI reflects a reception SINR that can be achieved when an eNB configures spatial channels using a PMI.

A system supporting an extended antenna configuration (e.g. an LTE-A system) considers achievement of an additional multi-user diversity by the use of MU-MIMO. Due to the existence of interference channels between UEs multiplexed in an antenna domain in MU-MIMO, it is necessary to avoid interference with other UEs, when an eNB transmits a DL signal to one of multiple UEs based on a CSI feedback received from the one UE. Accordingly, more accurate CSI than in Single User MIMO (SU-MIMO) should be fed back for a reliable MU-MIMO operation.

For more accurate measurement and reporting of CSI, a new CSI feedback scheme may be adopted by modifying conventional CSI including an RI, a PMI, and a CQI. For example, precoding information fed back from the receiver may be indicated by a set of two PMIs. One of the two PMIs (PMI 1) has a long-term and/or wideband property, referred to as W1, whereas the other PMI (PMI 2) has a short-term and/or subband property, referred to as W2. A final PMI may be determined by combining W1 and W2 (or a function of W1 and W2). For example, let the final PMI be denoted by W. Then W=W1*W2 or W=W2*W1.

CQI Calculation

On the assumption that a DL receiver is a UE, CQI calculation will be described below. However, it is to be understood that the same description applies to an RN serving as a DL reception entity.

A method for configuring/defining a reference resource in which the UE calculates a CQI (hereinafter, referred to as a CQI reference resource) for CSI reporting will be described. First of all, the definition of a CQI will be described in greater detail.

A CQI reported by the UE is a specific index. The CQI index represents a modulation scheme, a coding rate, etc. corresponding to a channel state. For example, [Table 3] lists CQI indexes and their interpretations.

[Table 3]

| CQI Index | modulation | code rate x 1024 | efficiency |
|-----------|-----------|------------------|------------|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

Based on an unrestricted observation interval in time and frequency, the UE may determine, for each CQI value reported in UL subframe n, the highest CQI index between 1 and 15 in [Table 3] which satisfies the following condition. A single PDSCH transport block that has a combination of modulation scheme and Transport Block Size (TBS) corresponding to the CQI index and occupies a group of DL physical resource blocks termed a CQI reference resource, can be received with a TB error probability not exceeding 0.1 (i.e. 10%). If even CQI index 1 does not satisfy the condition, the UE may select CQI index 0.

In transmission mode 9 (corresponding to up to 8-layer transmission) and feedback reporting mode, the UE may perform channel measurement only on a CSI-RS in order to calculate a CQI value to be reported in UL subframe n. In other transmission modes and corresponding reporting modes, the UE may perform channel measurement on a CRS, for CQI calculation.

A combination of modulation scheme and TBS may correspond to a CQI index, if the combination of modulation scheme and TBS can be signaled for transmission on a PDSCH in the CQI reference resource according to a relevant TBS table, the modulation scheme is indicated by the CQI index, and when applied to the reference resource, the combination of TBS and modulation scheme results in the code rate which is the closest possible to the code rate indicated by the CQI index. If more than one combination of TBS and modulation scheme results in a code rate equally close to the code rate indicated by the CQI index, only the combination with the smallest TBS is selected.

The CQI reference resource is defined as follows.

In the frequency domain, the CQI reference resource is defined by a group of DL physical resource blocks corresponding to a band to which the derived CQI value relates.

In the time domain, the CQI reference resource is defined by a single DL subframe $n-n_{CQI\_ref}$. For periodic CQI reporting, $n_{CQI\_ref}$ is the smallest value equal to or greater than 4, such that DL subframe $n-n_{CQI\_ref}$ corresponds to a valid DL subframe. For aperiodic CQI reporting, $n-n_{CQI\_ref}$ is determined such that the reference resource is in the same valid DL subframe corresponding to a CQI request (or the same valid DL subframe in which a CQI request is received) in a UL DCI format (a PDCCH DCI format for providing UL scheduling control information to the UE). In addition, for aperiodic CQI reporting, $n_{CQI\_ref}$ is equal to 4 and DL subframe $n-n_{CQI\_ref}$ corresponds to a valid DL subframe. Herein, DL subframe $n-n_{CQI\_ref}$ may be received after a subframe with a corresponding CQI request (a subframe carrying a CQI request) in a Random Access Response Grant. A DL subframe is considered to be valid if it is configured as a DL subframe for that UE, it is not an MBSFN subframe except in transmission mode 9, it does not contain a DwPTS field in case the length of DwPTS is $7680 \cdot T_s$ ($T_s = 1/(15000 \times 2048)$ seconds) and less, and it does not fall within a configured measurement gap for that UE. If there is no valid DL subframe for the CQI reference resource, CQI reporting may be omitted in UL subframe n.

In the layer domain, the CQI reference resource is defined by any RI and PMI on which the CQI is conditioned.

In the CQI reference resource, the UE may assume the followings for the purpose of deriving the CQI index: (1) the first 3 OFDM symbols of a DL subframe being occupied by control signaling, (2) no REs used by primary or secondary synchronization signals or a PBCH, (3) the CP length of the non-MBSFN subframes, (4) redundancy version 0, (5) a PDSCH Energy Per Resource Element (EPRE) to CSI-RS EPRE ratio having a specific value indicated by higher-layer signaling, in the case of a CSI-RS being used for channel measurement, (6) PDSCH transmission schemes (e.g., single antenna port transmission, transmission diversity, spatial multiplexing, MU-MIMO, etc.) for respective transmission modes configured for the UE (which may be the default mode), and (7) a PDSCH EPRE-to-CRS EPRE ratio being determined according to a predetermined condition, in the case of a CRS being used for channel measurement. For more details of CQI definition, refer to 3GPP TS36.213.

In summary, the DL receiver (e.g. a UE or an RN) may set a past specific single subframe as a CQI reference resource at the moment of CQI calculation and may calculate a CQI value such that the condition of a PDSCH being received from the eNB in the CQI reference resource with an error probability not exceeding 10% is satisfied. This CQI calculation method is fine under the condition that a signal strength and an interference can be measured in all general subframes except some special subframes (e.g. a subframe belonging to a measurement gap or a subframe with the size of a PDSCH transmission area equal to or smaller than a predetermined value).

eNB-RN <u>CQI Reference Resource</u>

If an RN is introduced, DL subframes are subjected to the above-described resource partitioning. That is, only a part of DL subframes may be configured as Un (backhaul) subframes. If the RN determines a CQI reference resource in the conventional manner, a subframe having the CQI reference resource may not be a Un DL subframe in some cases.

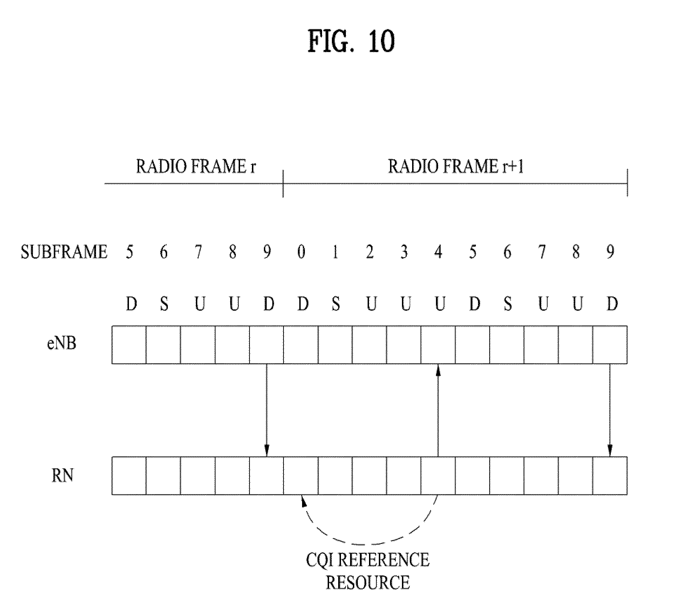

With reference to Fig. 10, an example of configuring a CQI reference resource in an RN will be described below.

In the example of Fig. 10, it is assumed that the RN reports a CQI periodically and determines a CQI reference resource in the conventional manner. That is, the CQI reference resource may be determined to be subframe n-4 or a closest valid DL subframe among subframes previous to subframe n-4 in order to calculate a CQI to be reported in Un UL subframe n.

In addition, it is also assumed that Un subframe configuration 18 for a TDD system (*SubframeConfigurationTDD*=18 in [Table 2]) applies to the RN in Fig. 10. Accordingly, subframe 4 is configured as an RN-to-eNB subframe and subframe 9 is configured as an eNB-to-RN subframe (i.e. a subframe that can deliver a PDSCH from an eNB to an RN) in each radio frame. In each radio frame, subframes 0, 1, 2, 3, 5, 6, 7 and 8 may be configured as access link (Uu link) subframes or subframes for eNB-UE transmission, not as Un subframes.

In this case, if the RN determines a CQI reference resource in the conventional manner, DL subframe 0 of radio frame r+1 may be selected as a CQI reference resource in which the RN calculates a CQI to be reported in Un UL subframe 4. However, if *SubframeConfigurationTDD*=18, subframe 0 may not be configured as a Un subframe and thus may not carry a PDSCH from the eNB to the RN. That is, the RN transmits a DL signal to a UE in subframe 0 but does not receive a DL signal from the eNB in subframe 0. The RN may receive the PDSCH from the eNB in subframe 9 of radio frame r. Therefore, a CQI calculated in the CQI reference resource set as subframe 0 of radio frame r+1 does not reliably reflect the state of a DL channel transmitted from the eNB to the RN.

Moreover, since DL subframe 0 may carry a Primary Synchronization Signal (PSS)/Secondary Synchronization Signal (SSS), DL subframe 0 may not be configured as an MBSFN subframe. Therefore, a CRS is always transmitted in subframe 0. In fact, however, an eNB-to-RN subframe may be configured as an MBSFN subframe as described before and a CRS is transmitted only in the control region of the MBSFN subframe (the control region 1021 in Fig. 9), not in the data region of the MBSFN subframe (or the transmission gap 1022 in Fig. 9). If transmission mode 9 (a mode of up to 8-layer transmission using a DMRS or UE-specific RS) is set for eNB-to-RN transmission, the eNB transmits the PDSCH in a CRS-free area to the RN. As a result, the CRS overhead of subframe 0 configured as the CQI reference resource does not match the CRS overhead of an actual eNB-to-RN subframe, resulting in inaccurate CQI calculation.

As described above, if the RN determines a CQI reference resource in the conventional manner, the CQI reference resource may not reflect the actual channel state of eNB-to-RN PDSCH transmission. The resulting decrease of CQI accuracy eventually reduces the overall performance of eNB-RN transmission. Therefore, the conventional CQI reference resource determination method is not viable for a DL reception entity for which only some subframes are configured as subframes in which a DL signal can be received from an eNB, such as an RN.

The present invention provides a method for enabling a DL reception entity such as an RN to calculate a CQI successfully by modifying the conventional CQI reference resource determination method. The condition that a subframe configured as a Un DL subframe is used for eNB-to-RN transmission is added to conventional conditions for determining a CQI reference resource.

For example, a CQI reference resource may be determined as defined conventionally, it may be determined whether the determined CQI reference resource is a Un DL subframe, and if the determined CQI reference resource is not a Un DL subframe, a closest Un DL subframe is selected as the CQI reference resource for the RN from among subframes previous to the determined CQI reference resource (subframes available as the CQI reference resource).

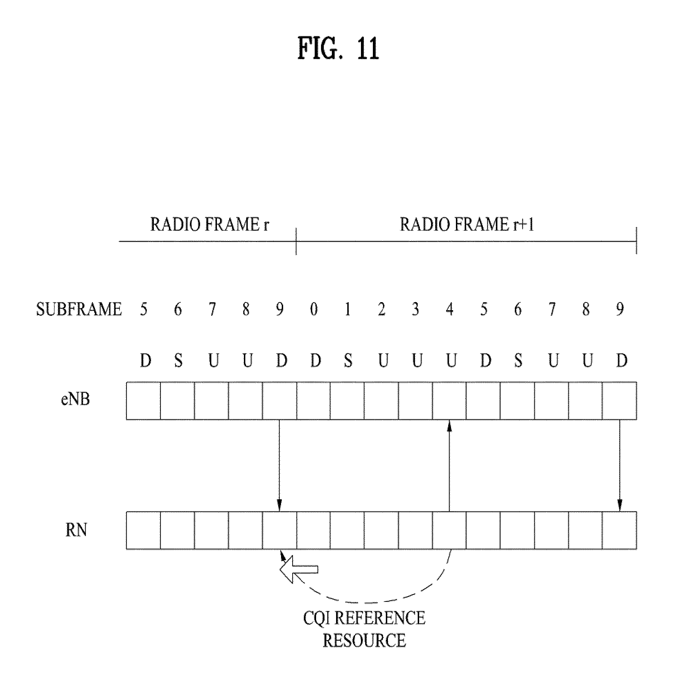

Fig. 11 illustrates an exemplary method for determining a CQI reference resource in an RN according to the present invention.

As in Fig. 10, it is assumed that Un subframe configuration 18 for a TDD system (*SubframeConfigurationTDD*=18 in [Table 2]) applies to the RN in the example of Fig. 11. For periodic CQI reporting, the RN determines a CQI reference resource to calculate a CQI to be reported in Un UL subframe n, by way of example. As described before, the CQI reference resource for the RN may be determined to be subframe n or a closest valid Un DL subframe selected from among subframes previous to subframe n. Accordingly, to report a CQI in subframe 4 of radio frame r+1, subframe 9 of radio frame r may be configured as a CQI reference resource because subframe 9 of radio frame r is a closest valid Un DL subframe from among subframe 0 of radio frame r+1 and its previous subframes. Subframe 9 of radio frame r may be configured as at once a subframe for eNB-to-RN PDSCH transmission and an MBSFN subframe and thus the CRS overhead of eNB-to-RN PDSCH transmission in subframe 9 of radio frame r may be considered as in the same environment as the CRS overhead of an actual eNB-to-RN PDSCH transmission. Consequently, the accuracy of a calculated CQI increases.

Thus, the CQI reference resource determination condition may be that "in eNB-RN transmission, a CQI reference resource is defined by a single DL subframe $n-n_{CQI\_ref}$ in the time domain, where for periodic CQI reporting, $n-n_{CQI\_ref}$ is the smallest value greater than or equal to 4, such that $n-n_{CQI\_ref}$ corresponds to a valid DL subframe configured for eNB-to-RN transmission" in an example of the present invention.

In another example of the present invention, the CQI reference resource determination condition may be that "in eNB-RN transmission, in the time domain, the CQI reference resource is defined by a single DL subframe $n-n_{CQI\_ref}$, where for aperiodic CQI reporting, $n-n_{CQI\_ref}$ is determined such that the CQI reference resource is in the same valid DL subframe corresponding to a CQI request (or the same valid DL subframe in which a CQI request is received) in a UL DCI format (a PDCCH DCI format for providing UL scheduling control information to the UE), in addition, for aperiodic CQI reporting, $n_{CQI\_ref}$ is equal to 4 and the DL subframe $n-n_{CQI\_ref}$ corresponds to a valid DL subframe configured for eNB-to-RN transmission, and DL subframe $n-n_{CQI\_ref}$ may be received after a subframe with a corresponding CQI request (a subframe carrying a CQI request) in a Random Access Response Grant".

In another example of the present invention, a CQI reference resource for eNB-to-RN transmission may be determined for an RN from among Un DL subframes by additionally defining a valid subframe as a Un DL subframe. Accordingly, the definition of a valid subframe as a condition for determining a CQI reference resource may be given as "a DL subframe configured for eNB-to-RN transmission is regarded as valid in eNB-RN transmission". This definition may apply to both periodic CQI reporting and aperiodic CQI reporting.

eNB-RN SRS Transmission

An exemplary method for transmitting an SRS to an eNB in an RN according to the present invention will be described below.

There are two types of SRSs: periodic SRS and aperiodic SRS. A periodic SRS is transmitted at every predetermined interval, whereas an aperiodic SRS is transmitted only when an eNB commands (or triggers) SRS transmission by a PDCCH. In the case of aperiodic SRS transmission, when aperiodic SRS transmission is triggered in DL subframe n, a UE may transmit an SRS in UL subframe n+k where k is an integer equal to or greater than 4, determined such that UL subframe n+k is a subframe capable of carrying the aperiodic SRS. Herein, k may be set to 4 or larger in consideration of a processing time taken to receive an SRS transmission command and generate an SRS sequence.

It is determined semi-statically by higher-layer signaling whether a subframe is configured to allow aperiodic SRS transmission. In most cases, a subframe enabling aperiodic SRS transmission may be configured every 5 or 10 subframes (i.e. every 5ms or 10ms).

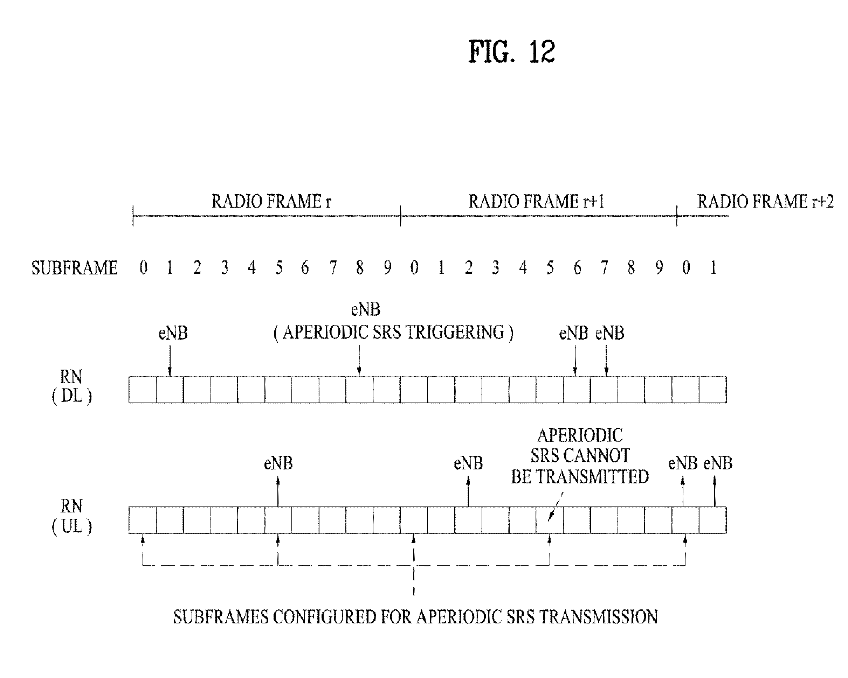

Fig. 12 illustrates exemplary determination of SRS transmission subframes in an RN.

As illustrated in Fig. 12, a higher layer configures subframe 0 and subframe 5 of each radio frame as SRS subframes for an RN. In Fig. 12, 8 bits of a Un subframe allocation message is set to '11000000' in frame structure type 1 (FDD) (refer to [Table 1]). That is, if an eNB may transmit a signal to an RN in subframe 1 and subframe 8 of radio frame r and subframe 6 and subframe 7 of radio frame r+1, the RN may transmit an SRS in subframe 5 of radio frame r, subframe 2 of radio frame r+1, and subframe 0 and subframe 1 of radio frame r+2. That is, when eNB-to-RN transmission takes place in subframe n, RN-to-eNB transmission takes place in subframe n+4 in Fig. 12. Herein, it is assumed that the eNB transmits control information triggering aperiodic SRS transmission to the RN in subframe 8 of radio frame r.

According to the conventional aperiodic SRS transmission method, the RN should transmit an SRS in subframe 8+k in response to the aperiodic SRS triggering in subframe 8 of radio frame r in the example of Fig. 12. Herein, k is the smallest integer equal to or greater than 4, determined such that subframe 8+k corresponds to a subframe configured to carry an aperiodic SRS. Although subframe 0 of radio frame r+1 is configured to carry an aperiodic SRS, k is not equal to or greater than 4. Subframe 5 of radio frame r+1 is a subframe that is configured to carry an aperiodic SRS and that makes k the smallest integer equal to or greater than 4. Therefore, subframe 5 of radio frame r+1 should be determined to be a subframe for aperiodic SRS transmission in the conventional aperiodic SRS transmission method. However, subframe 5 of radio frame r+1 is not configured as a Un UL subframe.

Accordingly, subframe n+k determined to carry an aperiodic SRS may not correspond to a Un UL subframe in which the RN can transmit a signal to the eNB in the conventional method. In this case, the RN cannot transmit an aperiodic SRS in the subframe. This is because while aperiodic SRS transmission subframes are generally configured every 5m or 10ms, Un subframes are configured every 8ms in many cases. In this context, the present invention provides a new method for determining a subframe to carry an aperiodic SRS in order to enable reliable aperiodic SRS transmission on a Un UL and thus prevent resource waste.

The RN transmits an aperiodic SRS in UL subframe n+k in response to an aperiodic SRS transmission trigger in DL subframe n, where k is the smallest integer equal to or greater than 4, determined such that subframe n+k is a subframe that is configured to carry an SRS and configured as an Un UL subframe. In other words, even though an aperiodic SRS can be transmitted in subframe n+4 or a subsequent subframe, unless subframe n+4 or the subsequent subframe is not a Un UL subframe, this subframe is ignored and it is determined that the next subframe configured to carry an aperiodic SRS is an Un UL subframe. This operation may be repeated. Therefore, a subframe configured as a Un UL subframe to carry an aperiodic SRS may be determined from among subframes following subframe n+4.

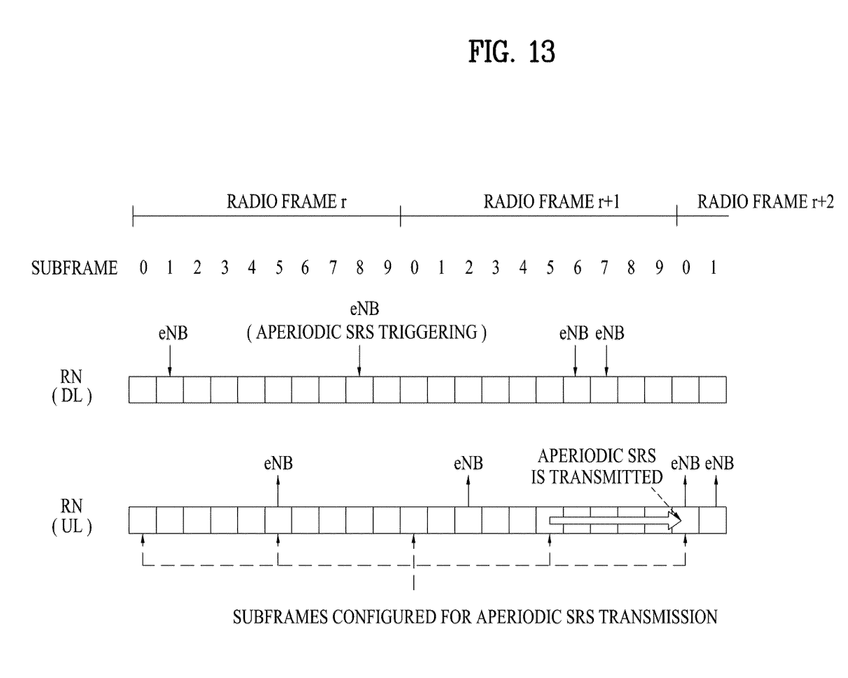

Fig. 13 illustrates an exemplary method for determining an aperiodic SRS transmission subframe in an RN according to the present invention.

As in Fig. 12, aperiodic SRS transmission subframes are configured as subframe 0 and subframe 5 of each radio frame, Un UL subframes are configured as subframe 5 of radio frame r, subframe 2 of radio frame r+1, and subframes 0 and subframe 1 of radio frame r+2, and control information triggering aperiodic SRS transmission is transmitted to an RN in subframe 8 of radio frame r+1 by an eNB. Subframe 0 of radio frame r+2 may be determined to deliver an aperiodic SRS because it is configured as at once an aperiodic SRS transmission subframe (i.e. subframe 5 and subframe 0 of each radio frame) and an Un UL subframe (i.e. subframe 0 and subframe 1 of radio frame r+2) among subframes apart from subframe 8 of radio frame r+1 by 4 or more subframes (i.e. subframes following subframe 2 of radio frame r+1).

Figs. 12 and 13 are pure examples presented to explain the principle of the present invention. Thus, SRS transmission subframes and Un DL/UL subframes may be configured in many other manners than illustrated in Figs. 12 and 13, with the principle of the present invention applied.

While the methods for determining a CQI reference resource and an SRS transmission subframe have been described above in the context of eNB-RN communication by way of example, the present invention is not limited thereto. For example, the principle of the present invention may apply to the case where any UE can communicate with an eNB and another UE (i.e. the UE is a UE-relay functioning as an RN) or to the case of UE-to-UE communication. For example, it may be assumed that resources for communication between UE1 and an eNB are multiplexed with (or distinguished from) resources for communication between UE1 and UE2, in subframes. In this case, UE1 may determine a CQI reference resource to calculate a CQI for a DL directed from the eNB based on the same principle of the present invention. In addition, UE1 may determine a subframe to carry an SRS to the eNB based on the afore-described principle of the present invention.

That is, the present invention is applicable as a method for determining a CQI reference in the case where actual time resources (e.g. subframes) for DL reception are limited to enable a DL reception entity (e.g. an RN or a UE) to calculate and feed back a CQI. In addition, the present invention is applicable as a method for transmitting an aperiodic SRS in the case where actual time resources (e.g. subframes) for UL transmission are limited to enable a UL transmission entity (e.g. an RN or a UE) to transmit an SRS.

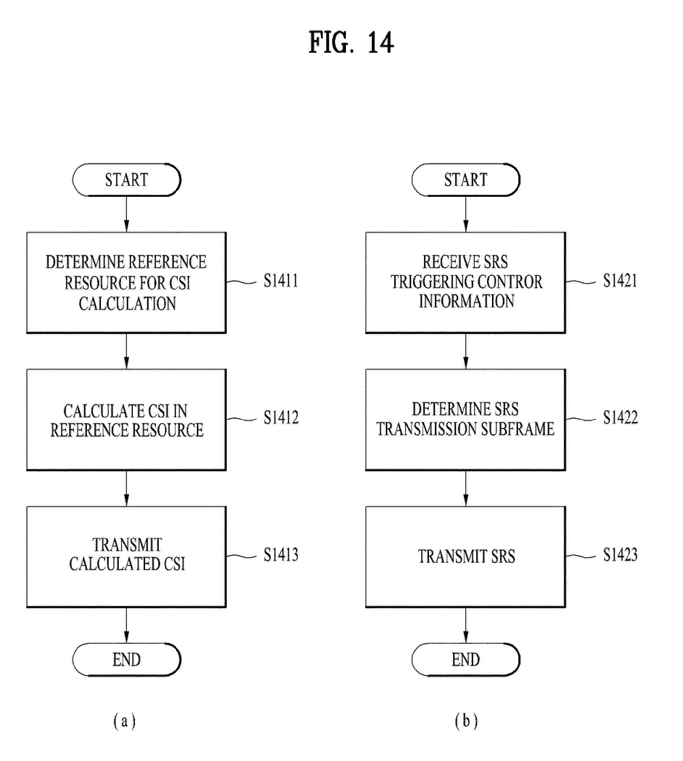

Fig. 14 is a flowchart illustrating a method for transmitting a UL signal in an RN according to an embodiment of the present invention. In the example of Fig. 14, a UL signal transmitted by the RN may be, for example, CSI or an SRS. In the description of Fig. 14, the RN may be a UE (i.e. a UE-relay) that can communicate with an eNB and another UE. For clarity of description, a UE-relay is also called an RN.

Fig. 14(a) illustrates an operation for determining a CQI reference resource in an RN in the CSI transmission method.

The RN may determine a reference resource for CQI calculation in step S1411. To calculate CSI to be reported in subframe n, the reference resource may reside in subframe n-k. Herein, k may be determined to be the smallest value equal to or greater than 4, satisfying the condition that subframe n-k corresponds to a subframe configured for eNB-to-RN transmission. That is, subframe n-k with the reference resource may be a subframe configured for eNB-to-RN PDSCH transmission or a subframe configured as an MBSFN subframe. A higher layer may configure eNB-to-RN transmission subframes for each of TDD and FDD systems.

The RN may calculate CSI in the determined reference resource in step S 1412. A CQI of the CSI may be determined to be a value indicating a combination of MCS and TBS with which the RN can receive a PDSCH with an error probability not exceeding a predetermined error probability in the reference resource.

In step S1413, the RN may transmit the CSI to the eNB. The CSI is transmitted in subframe n. CSI transmission may be periodic or aperiodic (i.e. upon receipt of a CSI report trigger from the eNB).

Fig. 14(b) illustrates an operation for determining an SRS transmission subframe in the RN in the SRS transmission method.

In step S1421, the RN may receive control information triggering SRS transmission. The control information is received in subframe n.

The RN may determine subframe n+k for SRS transmission in step S 1422. Herein, k may be determined to be the smallest value equal to or greater than 4, satisfying the condition that subframe n+k corresponds to at once a subframe configured to carry an aperiodic STS and a subframe configured for RN-to-eNB transmission. A subframe configured for RN-to-eNB transmission, which may correspond to subframe n+k may be configured by a higher layer in a TDD system or determined according to a predetermined timing relationship with respect to a subframe configured for eNB-to-RN transmission by the higher layer in an FDD system.

In step S1423, the RN may transmit an SRS in the determined subframe n+k to the eNB. This SRS transmission may correspond to aperiodic SRS transmission triggered by the eNB.

Any of the foregoing embodiments of the present invention may be applied independently or two or more of them may be applied in combination, to the UL signal (CSI and/or SRS) transmission and reception method described above with reference to Fig. 14.

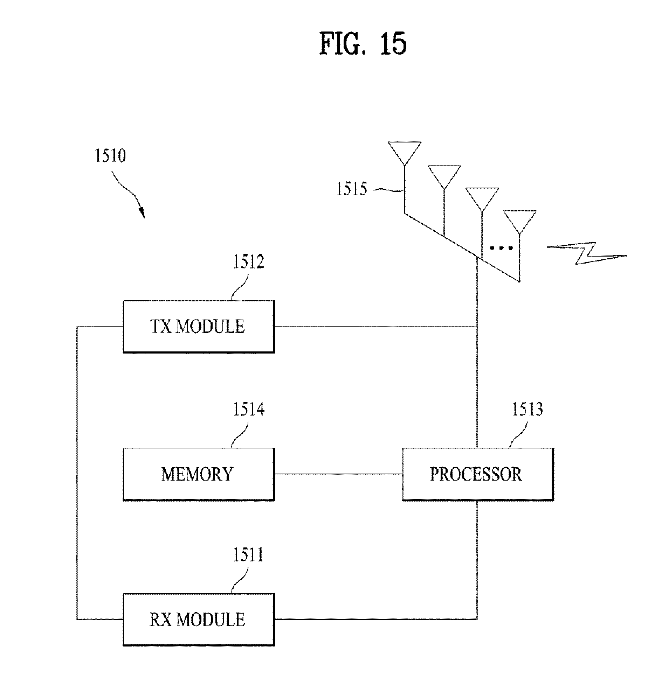

Fig. 15 is a block diagram of an RN according to the present invention.

Referring to Fig. 15, an RN 1510 of the present invention may include an Rx module 1511, a Tx module 1512, a processor 1513, a memory 1514, and a plurality of antennas 1515. The use of the plurality of antennas 1515 means that the RN 1510 supports MIMO transmission and reception. The Rx module 1511 may receive DL signals, data, and information from an eNB and UL signals, data, and information from a UE. The Tx module 1512 may transmit UL signals, data, and information to the eNB and DL signals, data, and information to the UE. The processor 1513 may provide overall control to the RN 1510.

In an embodiment of the present invention, the RN 1510 may be configured to transmit CSI. The processor 1513 of the RN 1510 may be configured to determine a reference resource for CSI calculation. In addition, the processor 1513 may be configured to calculate CSI in the reference resource and transmit the CSI in subframe n to the eNB through the Tx module 1513. Herein, the reference resource may be located in subframe n-k where k may be determined to be the smallest value equal to or greater than 4, satisfying the condition that subframe n-k corresponds to a subframe configured for eNB-to-RN transmission.

In an embodiment of the present invention, the RN 1510 may be configured to transmit an SRS. The processor 1513 of the RN 1510 may be configured to receive control information triggering SRS transmission in subframe n from the eNB through the Rx module 1511. In addition, the processor 1513 may be configured to determine subframe n+k that will carry an SRS. The processor 1513 may be configured to transmit the SRS in subframe n+k to the eNB through the Tx module 1512. Herein, k may be determined to be the smallest value equal to or greater than 4, such that subframe n+k corresponds to at once a subframe configured for aperiodic SRS transmission and a subframe configured for RN-to-eNB transmission.

Besides, the processor 1513 of the RN 1510 processes received information and information to be transmitted to the outside. The memory 1514 may store the processed information, etc. for a predetermined time and a component such as a buffer (not shown) may substitute for the memory 1514.

Any of the foregoing embodiments of the present invention may be applied independently or two or more of them may be applied in combination, to the specific configuration of an RN. Redundant descriptions are avoided for clarity.

The same description of the RN 1510 given with reference to Fig. 15 may apply to a UE serving as a relay (i.e. a UE-relay) or a UE that performs a UE-to-UE operation with another UE. In addition, the description of an eNB given with reference to Fig. 15 also applies to an RN serving as a DL transmission entity or a UL reception entity.

The above-described embodiments of the present invention may be achieved by various means, for example, hardware, firmware, software, or a combination thereof.

In a hardware configuration, methods according to embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing functions or operations as set forth herein. Software code may be stored in a memory unit and executed by a processor. The memory unit is located inside or outside the processor and may transmit and receive data to and from the processor via various known means.

The detailed description of the preferred embodiments of the present invention has been given to enable those skilled in the art to implement and practice the invention. Although the invention has been described with reference to the preferred embodiments, those skilled in the art will appreciate that various modifications and variations can be made in the present invention without departing from the spirit or scope of the invention described in the appended claims. For example, an embodiment of the present invention may be constructed by combining components or configurations of the above-described embodiments of the present invention. Accordingly, the invention should not be limited to the specific embodiments described herein, but should be accorded the broadest scope consistent with the principles and novel features disclosed herein.

Those skilled in the art will appreciate that the present invention may be carried out in other specific ways than those set forth herein without departing from the spirit and essential characteristics of the present invention. The above embodiments are therefore to be construed in all aspects as illustrative and not restrictive. The scope of the invention should be determined by the appended claims and their legal equivalents, not by the above description, and all changes coming within the meaning and equivalency range of the appended claims are intended to be embraced therein. In addition, it will be obvious to those skilled in the art that claims that do not explicitly cite in each other in the appended claims may be presented in combination as an exemplary embodiment of the present invention or included as a new claim by subsequent amendment after the application is filed.

**Industrial Applicability**

The embodiments of the present invention are applicable to various mobile communication systems.

**Claims**

1. A method for transmitting Channel State Information (CSI) at a relay in a wireless communication system, the method comprising:

   determining a reference resource for CSI calculation; and
   calculating CSI in the reference resource and transmitting the calculated CSI in subframe n to a Base Station (BS), wherein the reference resource is located in subframe n-k where k is a smallest value equal to or greater than 4, determined so that subframe n-k corresponds to a subframe configured for transmission from the BS to the relay.

2. The method according to claim 1, wherein subframe n-k is a subframe configured to carry a Physical Downlink Shared Channel (PDSCH) from the BS to the relay.

3. The method according to claim 1, wherein subframe n-k is configurable as a Multicast Broadcast Single Frequency Network (MBSFN) subframe by the RN.

4. The method according to claim 1, wherein the CSI is transmitted periodically or aperiodically.

5. The method according to claim 1, wherein the wireless communication system is a Time Division Duplexing (TDD) system or a Frequency Division Duplexing (FDD) system.

6. The method according to claim 1, wherein the CSI includes a Channel Quality Indicator (CQI) and the CQI is calculated to be a value that makes a PDSCH receivable in the reference resource with an error probability not exceeding a predetermined error probability.

7. The method according to claim 1, wherein the relay is a User Equipment (UE) that can communicate with the BS and another UE.

8. The method according to claim 1, wherein the subframe configured for transmission from the BS to the relay is indicated by a higher layer.

9. A relay for transmitting Channel State Information (CSI) in a wireless communication system, the relay comprising:

a reception module for receiving a downlink signal from a Base Station (BS);
a transmission module for transmitting an uplink signal to the BS; and
a processor for controlling the relay including the reception module and the transmission module,
wherein the processor is configured to determine a reference resource for CSI calculation, to calculate the CSI in the reference resource, and to transmit the calculated CSI in subframe n to the BS through the transmission module, and
wherein the reference resource is located in subframe n-k where k is a smallest value equal to or greater than 4, determined so that subframe n-k corresponds to a subframe configured for transmission from the BS to the relay.

10. A method for transmitting a Sounding Reference Signal (SRS) at a relay in a wireless communication system, the method comprising:

receiving control information triggering SRS transmission in subframe n from a Base Station (BS);
determining subframe n+k for SRS transmitting; and
transmitting an SRS in subframe n+k to the BS,
wherein k is a smallest value equal to or greater than 4, determined so that subframe n+k corresponds to a subframe configured for SRS transmission and a subframe configured for transmission from the relay to the BS.

11. The method according to claim 10, wherein the SRS is transmitted aperiodically.

12. The method according to claim 10, wherein the wireless communication system is a Time Division Duplexing (TDD) system or a Frequency Division Duplexing (FDD) system.

13. The method according to claim 10, wherein the relay is a User Equipment (UE) that can communicate with the BS and another UE.

14. The method according to claim 10, wherein the subframe configured for transmission from the relay to the BS is indicated by a higher layer or the subframe configured for transmission from the relay to the BS is determined implicitly from a subframe configured for transmission from the BS to the relay indicated by the higher layer.

15. A relay for transmitting a Sounding Reference Signal (SRS) in a wireless communication system, the relay comprising:

a reception module for receiving a downlink signal from a Base Station (BS);
a transmission module for transmitting an uplink signal to the BS; and
a processor for controlling the relay including the reception module and the transmission module,
wherein the processor is configured to receive control information triggering SRS transmission in subframe n from the BS through the reception module, to determine subframe n+k for SRS transmission, and to transmit an SRS in subframe n+k to the BS through the transmission module, and
wherein k is a smallest value equal to or greater than 4, determined so that subframe n+k corresponds to a subframe configured for SRS transmission and a subframe configured for transmission from the relay to the BS.

# FIG. 1

LINK USING DOWNLINK CARRIER BAND
LINK USING UPLINK CARRIER BAND

# FIG. 2

Radio frame

Slot

| #0 | #1 | #2 | ... | #18 | #19 |

Sub frame

(a)

One radio frame, $T_S = 307200T = 10ms$

One half-frame, $T_S = 153600T = 5ms$

One slot $T_{slot} = 15360T_S$

$30720T_S$

| Subframe #0 | | | | Subframe #2 | Subframe #3 | Subframe #4 | Subframe #5 | | | | Subframe #7 | Subframe #8 | Subframe #9 |

One subframe, $30720T_S$

DwPTS    GP    UpPTS

DwPTS    GP    UpPTS

(b)

EP 2 667 524 A2

# FIG. 3

One downlink slot

7 OFDM symbols

$N^{DL} \times 12$ Sub - carriers

12 Sub - carriers

Resource block
$12 \times 7$ resource elements

Resource element

# FIG. 4

Control region · · · Date region

1st slot · · · 2st slot

One sub-frame

Frequency

Time

# FIG. 5

Control region

Date region

RB pair

One slot    One slot

Frequency

Sub-frame

Time

# FIG. 6

(a)

(b)

# FIG. 7

CONTROL REGION

(a)

CONTROL REGION

(b)

## FIG. 8

| | SLOT 0 = 0.5 ms | SLOT 1 = 0.5 ms |
|---|---|---|

| CP | LB#1 | CP | LB#2 | CP | LB#3 | CP | LB#4 RS | CP | LB#5 | LB#6 | LB#7 | CP | LB#8 | CP | LB#9 | CP | LB#10 | CP | LB#11 RS | CP | LB#12 | CP | LB#13 | CP | LB#14 SRS |

SUBFRAME = 1 ms

# FIG. 9

FIG. 10

RADIO FRAME r       RADIO FRAME r+1

SUBFRAME   5   6   7   8   9   0   1   2   3   4   5   6   7   8   9

          D   S   U   U   D   D   S   U   U   U   D   S   U   U   D

eNB

RN

CQI REFERENCE
RESOURCE

# FIG. 11

RADIO FRAME r | RADIO FRAME r+1

| SUBFRAME | 5 | 6 | 7 | 8 | 9 | 0 | 1 | 2 | 3 | 4 | 5 | 6 | 7 | 8 | 9 |
|----------|---|---|---|---|---|---|---|---|---|---|---|---|---|---|---|
|          | D | S | U | U | D | D | S | U | U | U | D | S | U | U | D |

eNB

RN

CQI REFERENCE
RESOURCE

# FIG. 12

SUBFRAMES CONFIGURED FOR APERIODIC SRS TRANSMISSION

# FIG. 13

RADIO FRAME r | RADIO FRAME r+1 | RADIO FRAME r+2

SUBFRAME  0 1 2 3 4 5 6 7 8 9  0 1 2 3 4 5 6 7 8 9  0 1

eNB
( APERIODIC SRS TRIGGERING )

eNB          eNB eNB

RN ( DL )

eNB          eNB          APERIODIC SRS IS TRANSMITTED   eNB eNB

RN ( UL )

SUBFRAMES CONFIGURED FOR APERIODIC SRS TRANSMISSION

# FIG. 14

START

DETERMINE REFERENCE
RESOURCE FOR CSI
CALCULATION — S1411

CALCULATE CSI IN
REFERENCE RESOURCE — S1412

TRANSMIT
CALCULATED CSI — S1413

END

(a)

START

RECEIVE SRS
TRIGGERING CONTROR
INFORMATION — S1421

DETERMINE SRS
TRANSMISSION SUBFRAME — S1422

TRANSMIT SRS — S1423

END

(b)

# FIG. 15